# EUROPEAN PATENT APPLICATION

(11) **EP 4 711 428 A1**
(43) Date of publication of application: **18.03.2026**
(21) Application number: 24803547.9
(22) Date of filing: 10.05.2024
(51) Int. Cl.: C09D 133/14, C09D 5/02

(54) **COMPOSITION, COATING COMPOSITION, ARTICLE, METHOD FOR PRODUCING COMPOSITION, LIGHT STABILIZER MONOMER COMPONENT, AND LIGHT STABILIZER POLYMER**

(30) Priority: 10.05.2023 JP 2023078212
(71) Applicant: ADEKA CORPORATION, Arakawa-ku Tokyo 116-8554 (JP)
(72) Inventor: ISHIZUKI Kazuya, Tokyo 116-8554 (JP); KATAGIRI Ryuu, Tokyo 116-8554 (JP)
(74) Representative: Gill Jennings & Every LLP
(86) International application number: PCT/JP2024/017486
(87) International publication number: WO 2024/232439

(57) **Abstract**

To provide a composition, a coating material composition, an article, a method for producing a composition, a light stabilizer monomer component, and a light stabilizer polymer. A composition includes a polymer obtained by polymerizing a monomer component containing a compound represented by the following general formula (1), and an aqueous dispersion medium, 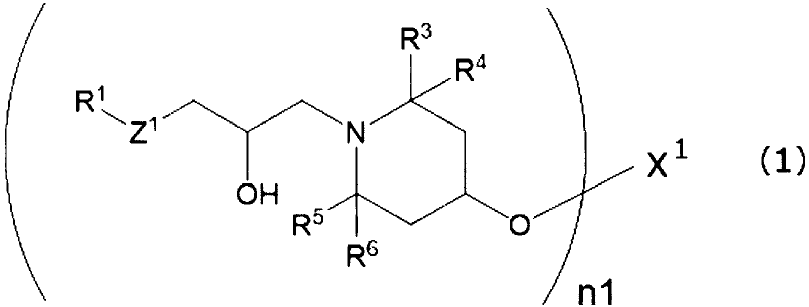 in the general formula (1), n1 represents 1 or 2, in which, when n1 is 1, X¹ represents a substituted or unsubstituted monovalent hydrocarbon group having 1 to 30 carbon atoms, or the like, or when n1 is 2, X¹ represents a substituted or unsubstituted divalent hydrocarbon group having 1 to 30 carbon atoms, or the like and Y¹ represents a single bond or the like, Z¹ represents a single bond or the like, R³ to R⁸ each independently represent a substituted or unsubstituted monovalent hydrocarbon group having 1 to 30 carbon atoms, and at least one of X¹ and R¹ is a group containing a vinyl group, and 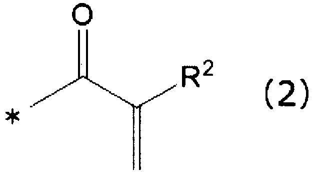 in the general formula (2), * represents a moiety bound with an oxygen atom, and R² represents a hydrogen atom or the like.

## Description

### TECHNICAL FIELD

The present invention relates to a composition, a coating material composition, an article, a method for producing a composition, a light stabilizer monomer component, and a light stabilizer polymer, and specifically relates to a composition, a coating material composition, an article, a method for producing a composition, a light stabilizer monomer component, and a light stabilizer polymer, in which a dispersion excellent in stability can be formed under an acidic condition.

### BACKGROUND ART

Various compositions are studied as components for coating materials to be used for coating of automobiles, building materials, and the like. Patent Document 1 below proposes, as such a composition, for example, an acrylic polymer including 2,2,6,6-tetramethyl-4-piperidyl methacrylate as a polymerization component.

### RELATED ART DOCUMENT

### PATENT DOCUMENT

Patent Document 1: JP 2020-117668 A

### SUMMARY OF THE INVENTION

### PROBLEMS TO BE SOLVED BY THE INVENTION

However, a dispersion in which the acrylic polymer proposed in Patent Document 1 above is dispersed in water cannot be sometimes said to be sufficient in stability under an acidic condition, and has room for further improvement.

An object of the present invention is then to provide a composition, a coating material composition, an article, a method for producing a composition, a light stabilizer monomer component, and a light stabilizer polymer, in which a dispersion excellent in stability can be formed under an acidic condition.

### MEANS FOR SOLVING THE PROBLEMS

The present inventors have made intensive studies in order to solve the above problems, and as a result, have found that the above problems can be solved by a compound having a specified structure, thereby leading to completion of the present invention.

Specifically, the present invention relates to a composition including a polymer obtained by polymerizing a monomer component containing a compound represented by the following general formula (1), and an aqueous dispersion medium; 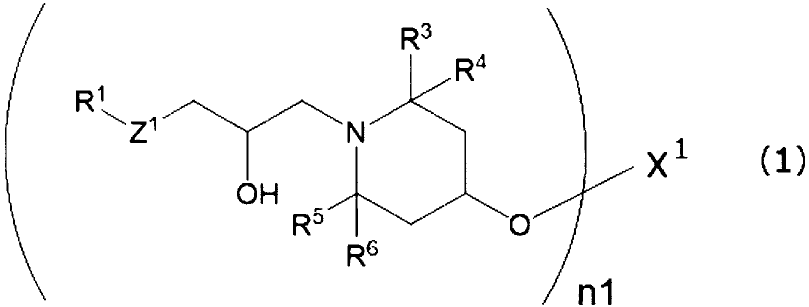 in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group; 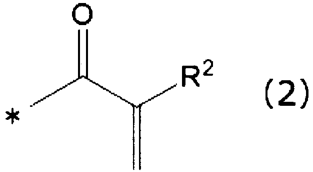 in the general formula (2), * represents a moiety bound with an oxygen atom, and R² represents a hydrogen atom or a substituted or unsubstituted monovalent hydrocarbon group having 1 to 30 carbon atoms.

The present invention also relates to a coating material composition including a polymer obtained by polymerizing a monomer component containing the compound represented by the general formula (1).

The present invention further relates to an article including a coating film obtained by coating with the coating material composition.

The present invention still further relates to a method for producing a composition, the method including a dispersing step of dispersing a polymer obtained by polymerizing a monomer component containing the compound represented by the general formula (1), in an aqueous dispersion medium.

The present invention still further relates to a light stabilizer monomer component to be used for a composition including a light stabilizer polymer obtained by polymerizing a light stabilizer monomer component, and an aqueous dispersion medium, in which the light stabilizer monomer component includes the compound represented by the general formula (1).

The present invention still further relates to a light stabilizer polymer to be used for a composition including a light stabilizer polymer and an aqueous dispersion medium, in which the light stabilizer polymer is obtained by polymerizing a light stabilizer monomer component including the compound represented by the general formula (1).

### EFFECTS OF THE INVENTION

According to the present invention, it is possible to provide a composition, a coating material composition, an article, a method for producing a composition, a light stabilizer monomer component, and a light stabilizer polymer, in which a dispersion excellent in stability can be formed under an acidic condition.

### MODE FOR CARRYING OUT THE INVENTION

Hereinafter, embodiments of the present invention are described in detail. First, a composition of the present embodiment is described.

### <Composition>

The composition of the present embodiment includes a polymer obtained by polymerizing a monomer component containing a compound represented by the following general formula (1), and an aqueous dispersion medium.

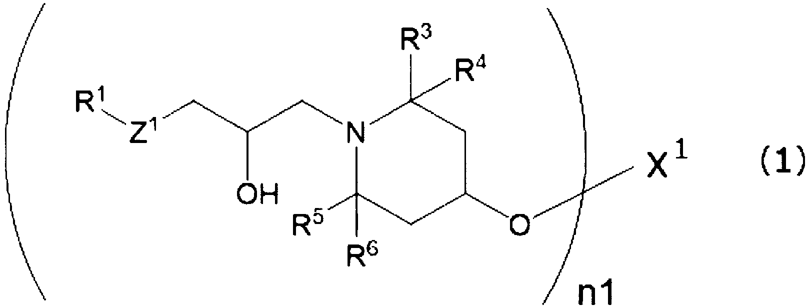

Here, in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group.

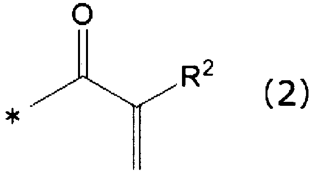

Here, in the general formula (2), * represents a moiety bound with an oxygen atom, and R² represents a hydrogen atom or a substituted or unsubstituted monovalent hydrocarbon group having 1 to 30 carbon atoms.

Herein, in the present embodiment, "Z¹ represents a single bond" indicates that Z¹ does not have any atom and two atoms linked with Z¹ in the general formula (1) are directly bound. In addition, "Y¹ represents a single bond" indicates that Y¹ does not have any atom and two atoms linked with Y¹ are directly bound.

The composition of the present embodiment allows for formation of a dispersion excellent in stability under an acidic condition. When the composition of the present embodiment is used as a component of a coating material composition, excellent light resistance can be imparted to a coating film obtained by coating with the coating material composition.

The reason why the composition of the present embodiment allows for formation of a dispersion excellent in stability under an acidic condition, although not necessarily clear, is presumed as follows. Specifically, 2,2,6,6-tetramethyl-4-piperidyl methacrylate is a basic compound because this compound has a piperidine ring and a nitrogen atom on the piperidine ring corresponds to a secondary amine. Accordingly, when a dispersion in which a polymer obtained by polymerizing a monomer component containing this compound is dispersed in an aqueous dispersion medium is exposed under an acidic condition, a nitrogen atom on the piperidine ring in the polymer reacts with an acid to generate a base. This dispersion easily causes aggregation due to coagulation with the base thus generated. On the other hand, a nitrogen on a piperidine ring in the compound represented by the general formula (1) included in the composition of the present embodiment corresponds to a tertiary amine, and basicity is moderately suppressed. This chemical structure sufficiently inhibits a base from being generated, when a dispersion in which a polymer obtained by polymerizing a monomer component containing the compound represented by the general formula (1) is dispersed in an aqueous dispersion medium is exposed under an acidic condition. Furthermore, the compound represented by the general formula (1) has a hydroxyl group and has moderate hydrophilicity. This chemical structure sufficiently inhibits a dispersion in which a polymer obtained by polymerizing a monomer component containing the compound represented by the general formula (1) is dispersed in an aqueous dispersion medium, from causing coagulation under an acidic condition. For the above reasons, it is presumed that the composition of the present embodiment allows for formation of a dispersion excellent in stability under an acidic condition.

### (Polymer)

As described above, the composition of the present embodiment includes a polymer, and this polymer is obtained by polymerizing a monomer component containing the compound represented by the general formula (1).

Examples of the substituted or unsubstituted monovalent hydrocarbon group having 1 to 30 carbon atoms, represented by R¹, R², R³, R⁴, R⁵, R⁶, R⁷ and R⁸ in the general formula (1) and the general formula (2), include a substituted or unsubstituted monovalent aliphatic saturated hydrocarbon group, a substituted or unsubstituted monovalent aliphatic unsaturated hydrocarbon group, and a substituted or unsubstituted monovalent aromatic hydrocarbon group.

Examples of the monovalent aliphatic saturated hydrocarbon group here include linear alkyl groups such as a methyl group, an ethyl group, a n-propyl group, a n-butyl group, a n-pentyl group, a n-hexyl group, a n-heptyl group, a n-octyl group, a n-nonyl group, a n-decyl group, a n-dodecyl group, a n-tetradecyl group, a n-hexadecyl group, a n-octadecyl group, a n-eicosyl group, a n-docosyl group, and n-triacontyl, branched alkyl groups such as an isopropyl group, an isobutyl group, a sec-butyl group, a tert-butyl group, an isopentyl group, a neopentyl group, a *tert-*amyl group, a 2-heptyl group, a *tert-*heptyl group, a 2-ethylhexyl group, a *tert*-octyl group, an isononyl group, an isodecyl group, and a 3,5,5-trimethylhexyl group, and cyclic alkyl groups such as a cyclopentyl group, a cyclohexyl group, a cyclooctyl group, and an adamantyl group.

Examples of the monovalent aliphatic unsaturated hydrocarbon group include a vinyl group, a 2-propenyl group, a 2-butenyl group, a 3-butenyl group, a 9-octadecenyl group, and a 9,12-octadecadienyl group.

Examples of the monovalent aromatic hydrocarbon group include a phenyl group, a naphthyl group, a biphenyl group, and an anthracyl group.

When the monovalent hydrocarbon having 1 to 30 carbon atoms, represented by R¹, R², R³, R⁴, R⁵, R⁶, R⁷ and R⁸ in the general formula (1) and the general formula (2), has a substituent, examples of the substituent includes halogen atoms such as a fluorine atom, a chlorine atom, and a bromine atom, alkoxy groups such as a methoxy group, an ethoxy group, and a tert-butyloxy group, trialkylsilyl groups such as a trimethylsilyl group and a triethylsilyl group, dialkylalkoxysilyl groups such as a dimethylmethoxysilyl group, a dimethylethoxysilyl group, a diethylmethoxysilyl group, and a diethylethoxysilyl group, alkyldialkoxysilyl groups such as a methyldimethoxysilyl group, a methyldiethoxysilyl group, an ethyldimethoxysilyl group, and an ethyldiethoxysilyl group, trialkoxysilyl groups such as a trimethoxysilyl group and a triethoxysilyl group, trialkylsiloxy groups such as a trimethylsiloxy group and a triethylsiloxy group, dialkylalkoxysiloxy groups such as a dimethylmethoxysiloxy group, a dimethylethoxysiloxy group, a diethylmethoxysiloxy group, and a diethylethoxysiloxy group, alkyldialkoxysiloxy groups such as a methyldimethoxysiloxy group, a methyldiethoxysiloxy group, an ethyldimethoxysiloxy group, and an ethyldiethoxysiloxy group, and trialkoxysiloxy groups such as a trimethoxysiloxy group and a triethoxysiloxy group.

Examples of the substituted or unsubstituted monovalent hydrocarbon group having 1 to 30 carbon atoms, represented by X¹ in the general formula (1), include those which are the same as those exemplified as the substituted or unsubstituted monovalent hydrocarbon group having 1 to 30 carbon atoms, represented by R¹, R², R³, R⁴, R⁵, R⁶, R⁷, and R⁸

Examples of the substituted or unsubstituted divalent hydrocarbon group having 1 to 30 carbon atoms, represented by X¹ in the general formula (1), include a divalent saturated hydrocarbon group and a divalent unsaturated hydrocarbon group. Examples of the divalent saturated hydrocarbon group include a methylene group, an ethylene group, a propylene group, a butylene group, a hexylene group, an octylene group, a decylene group, a dodecylene group, a hexadecylene group, an octadecylene group, an eicosylene group, a docosylene group, a triacontylene group, linear alkanediyl groups such as an ethan-1,1-diyl group, a propan-1,1-diyl group, a butan-1,1-diyl group, and a hexan-1,1-diyl group, branched alkanediyl groups such as a propan-2,2-diyl group, and cyclic alkanediyl groups such as a cyclohexan-1,4-diyl group and a cyclohexan-1,1-diyl group. Examples of the divalent unsaturated hydrocarbon group include a 9-octadecen-1,18-diyl group and a 9,12-octadecadien-1,18-diyl group.

Examples of the substituted or unsubstituted divalent hydrocarbon group having 1 to 30 carbon atoms, represented by Y¹ in the general formula (1), include those which are the same as those exemplified as the substituted or unsubstituted divalent hydrocarbon group having 1 to 30 carbon atoms, represented by X¹.

In the composition of the present embodiment, Z¹ in the general formula (1) is preferably an oxygen atom. In this case, the compound represented by the general formula (1) is further enhanced in hydrophilicity, and the composition of the present embodiment allows for formation of a dispersion further excellent in stability under an acidic condition.

When n1 is 1, X¹ is preferably a group represented by -C(=O)-R⁷ or the group represented by the general formula (2), from the viewpoint that a composition allowing for formation of a dispersion further excellent in stability under an acidic condition is obtained. When n1 is 2, X¹ is preferably a group represented by -C(=O)-Y¹-C(=O)- or a group represented by -C(=O)- group, more preferably a group represented by -C(=O)-Y¹-C(=O)-from the same viewpoint. Furthermore, Y¹ is preferably a divalent hydrocarbon group having 1 to 30 carbon atoms, more preferably a divalent saturated hydrocarbon group having 1 to 30 carbon atoms, further preferably a linear alkanediyl group having 1 to 30 carbon atoms, still further preferably an alkylene group having 1 to 30 carbon atoms from the same viewpoint. Furthermore, the number of carbon atoms in Y¹ is preferably 2 to 16, more preferably 4 to 14, further preferably 6 to 12 from the same viewpoint.

In addition, n1 is preferably 1 from the viewpoint that a composition allowing for formation of a dispersion further excellent in stability under an acidic condition is obtained.

In addition, in the composition of the present embodiment, R¹ is preferably a substituted or unsubstituted monovalent hydrocarbon group having 1 to 30 carbon atoms from the viewpoint that a composition allowing for formation of a dispersion further excellent in stability under an acidic condition is obtained. In addition, in the composition of the present embodiment, R¹ is more preferably a substituted or unsubstituted monovalent aliphatic hydrocarbon group having 1 to 30 carbon atoms, still more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the same viewpoint. Furthermore, the number of carbon atoms in R¹ is preferably 1 to 20, more preferably 1 to 10, further preferably 1 to 5 from the same viewpoint.

In the composition of the present embodiment, R¹ may be a substituted or unsubstituted monovalent aliphatic unsaturated hydrocarbon group having 2 to 30 carbon atoms. In this case, R¹ is preferably an unsubstituted monovalent aliphatic unsaturated hydrocarbon group having 2 to 30 carbon atoms, more preferably a linear alkenyl group having 2 to 30 carbon atoms, further preferably a linear alkenyl group having 2 to 10 carbon atoms, still further preferably a vinyl group, a 2-propenyl group, a 2-butenyl group or a 3-butenyl group, particularly preferably a 2-propenyl group.

In addition, in the composition of the present embodiment, R² is preferably a hydrogen atom or a substituted or unsubstituted monovalent aliphatic hydrocarbon group having 1 to 30 carbon atoms, more preferably a hydrogen atom or a substituted or unsubstituted monovalent aliphatic saturated hydrocarbon group having 1 to 30 carbon atoms, further preferably a hydrogen atom or an unsubstituted monovalent aliphatic saturated hydrocarbon group having 1 to 30 carbon atoms, still further preferably a hydrogen atom or a linear alkyl group having 1 to 30 carbon atoms from the viewpoint that a composition allowing for formation of a dispersion further excellent in stability under an acidic condition is obtained. In addition, in the composition of the present embodiment, when R² is a substituted or unsubstituted monovalent aliphatic hydrocarbon group having 1 to 30 carbon atoms, the number of carbon atoms in R² is preferably 1 to 10, more preferably 1 to 5, further preferably 1 to 2, particularly preferably 1 from the same viewpoint.

Furthermore, in the composition of the present embodiment, R³, R⁴, R⁵ and R⁶ are each independently preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. In addition, the composition of the present embodiment, the number of carbon atoms in each of R³, R⁴, R⁵ and R⁶ is independently preferably 1 to 10, more preferably 1 to 5, further preferably 1 to 2, particularly preferably 1 from the same viewpoint.

Herein, in the composition of the present embodiment, R⁷ is preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. Furthermore, the number of carbon atoms in R⁷ is preferably 5 to 27, more preferably 7 to 23, further preferably 9 to 21 from the same viewpoint.

In addition, in the composition of the present embodiment, R⁸ is preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. Furthermore, the number of carbon atoms in R⁸ is preferably 5 to 27, more preferably 7 to 23, further preferably 9 to 21 from the same viewpoint.

As described above, at least one of X¹ and R¹ in the general formula (1) is a group containing a vinyl group. In the composition of the present embodiment, only any one of X¹ and R¹ in the general formula (1) is preferably a group containing a vinyl group. In this case, a polymer obtained by polymerizing a monomer component including the compound represented by the general formula (1) has a moderate degree of crosslinking, and, when the composition is used as a component of a coating material composition, the coating material composition is excellent in film formability.

Specific examples of the compound represented by the general formula (1) include the following Compounds No. 1 to No. 28. However, the compound represented by the general formula (1) is not limited to the following compounds.

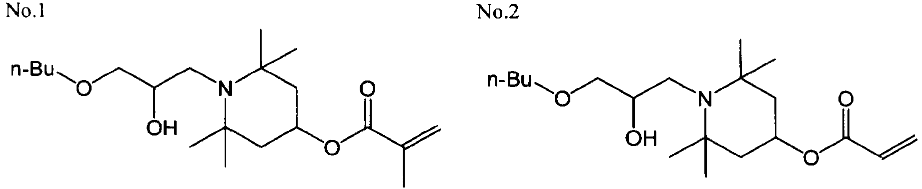

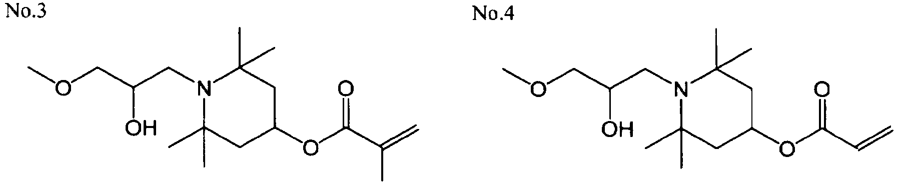

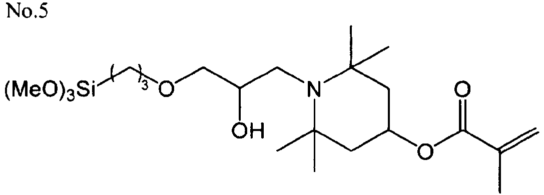

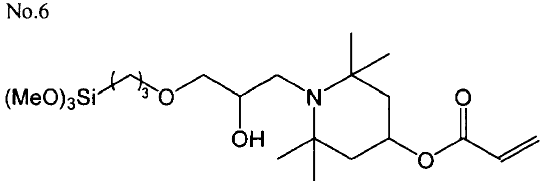

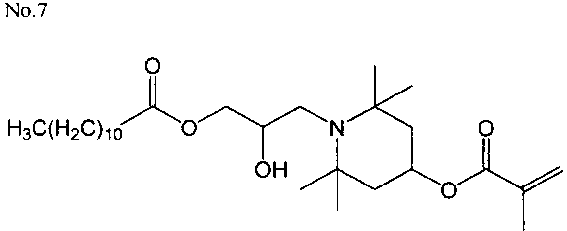

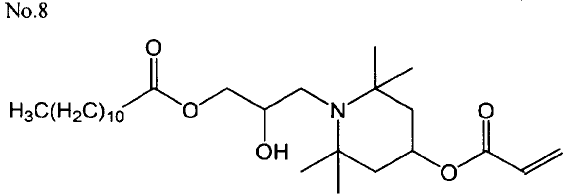

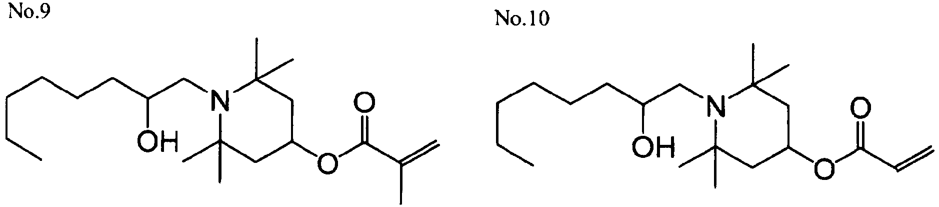

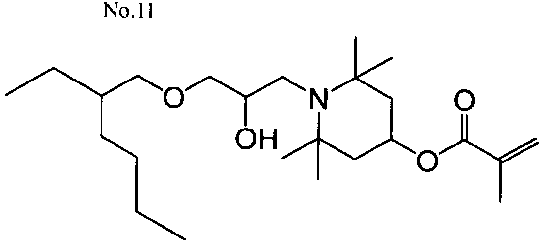

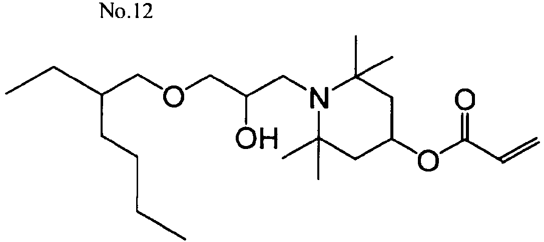

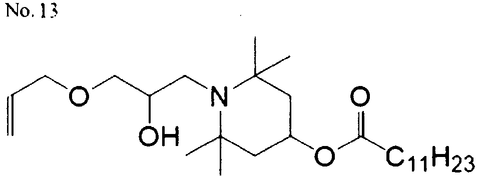

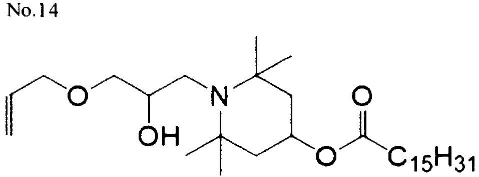

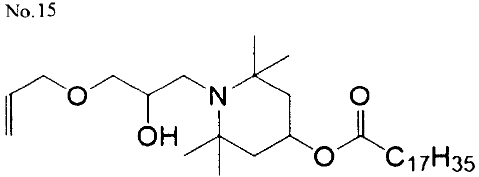

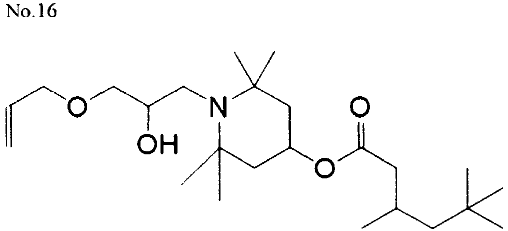

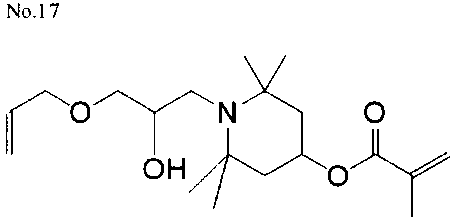

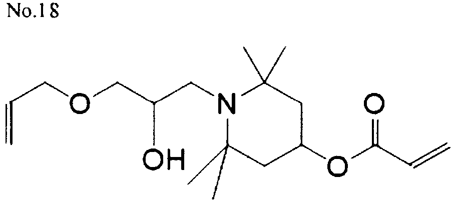

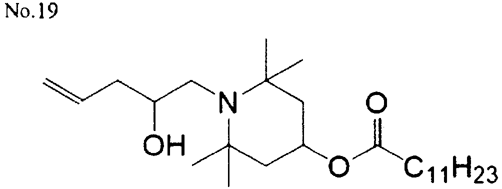

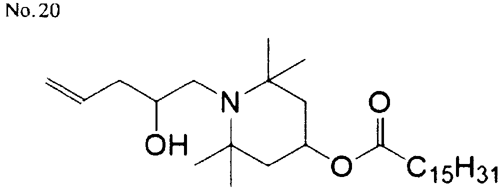

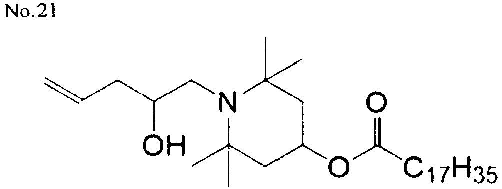

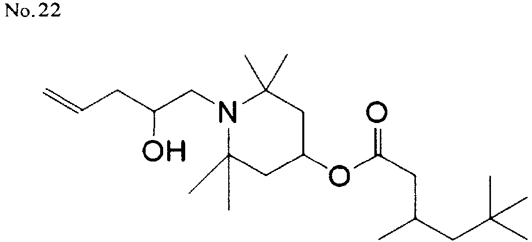

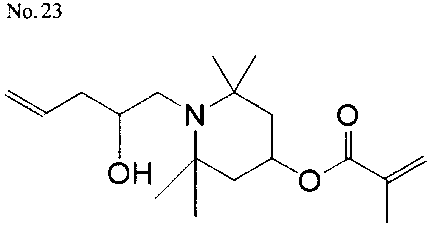

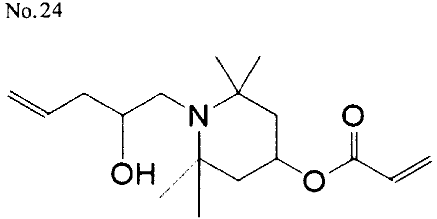

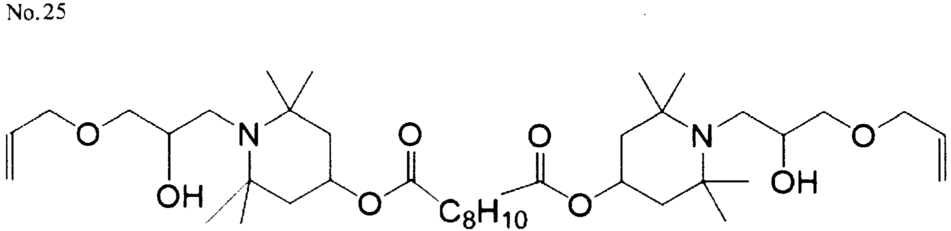

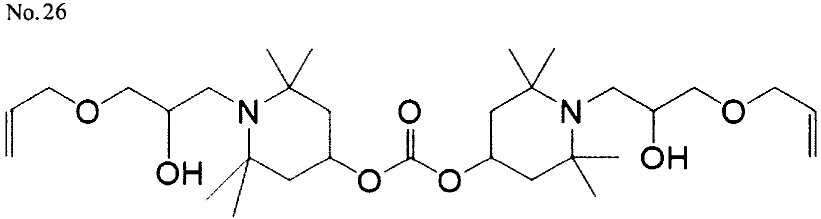

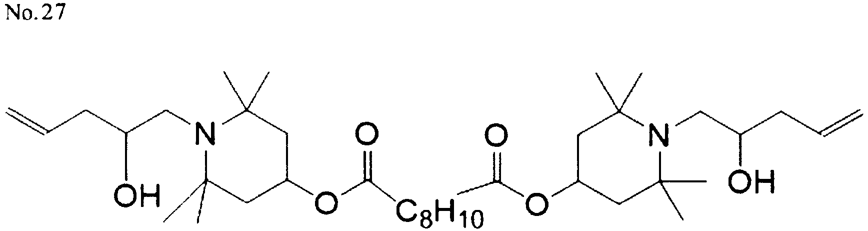

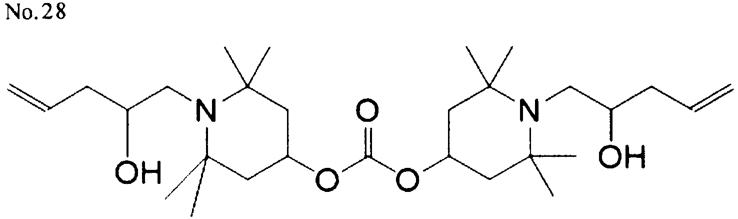

The compound represented by the general formula (1) can be produced by, for example, a method including condensing 2,2,6,6-tetramethylpiperidin-4-ol and carboxylic acid such as (meth)acrylic acid or fatty acid to produce an ester compound, and reacting the ester compound and an epoxy compound such as alkyl glycidyl ether or allyl glycidyl ether in the presence of a catalyst such as zinc chloride.

In the composition of the present embodiment, the compound represented by the general formula (1) is preferably a compound represented by the following general formula (11) from the viewpoint that a composition allowing for formation of a dispersion further excellent in stability under an acidic condition is obtained.

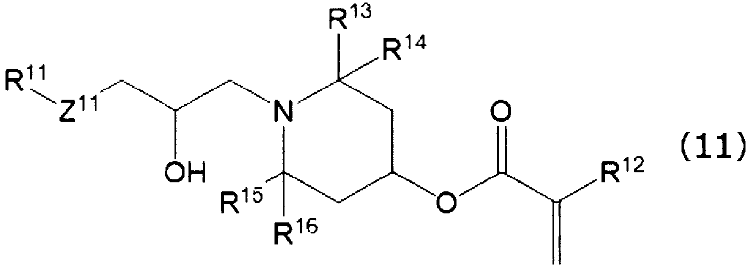

Here, in the general formula (11), Z¹¹ represents a single bond or an oxygen atom, R¹¹ represents a substituted or unsubstituted monovalent hydrocarbon group having 1 to 30 carbon atoms or a group represented by -C(=O)-R¹⁸, R¹² represents a hydrogen atom or a substituted or unsubstituted monovalent hydrocarbon group having 1 to 30 carbon atoms, and R¹³, R¹⁴, R¹⁵, R¹⁶ and R¹⁸ each independently represent a substituted or unsubstituted monovalent hydrocarbon group having 1 to 30 carbon atoms.

Herein, in the present embodiment, "Z¹¹ represents a single bond" indicates that Z¹¹ does not have any atom and two atoms linked with Z¹¹ in the general formula (11) are directly bound.

Examples of the substituted or unsubstituted monovalent hydrocarbon group having 1 to 30 carbon atoms, represented by R¹¹, R¹², R¹³, R¹⁴, R¹⁵, R¹⁶ and R¹⁸ in the general formula (11), include those which are the same as those exemplified as the substituted or unsubstituted monovalent hydrocarbon group having 1 to 30 carbon atoms, represented by R¹, R², R³, R⁴, R⁵, R⁶, R⁷ and R⁸ in the general formula (1).

In the composition of the present embodiment, Z¹¹ in the general formula (11) is preferably an oxygen atom. In this case, the compound represented by the general formula (11) is further enhanced in hydrophilicity and the composition of the present embodiment allows for formation of a dispersion further excellent in stability under an acidic condition.

In addition, in the composition of the present embodiment, R¹¹ is preferably a substituted or unsubstituted monovalent hydrocarbon group having 1 to 30 carbon atoms from the viewpoint that a composition allowing for formation of a dispersion further excellent in stability under an acidic condition is obtained. In addition, in the composition of the present embodiment, R¹¹ is more preferably a substituted or unsubstituted monovalent aliphatic hydrocarbon group having 1 to 30 carbon atoms, still more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the same viewpoint. Furthermore, the number of carbon atoms in R¹¹ is preferably 1 to 20, more preferably 1 to 10, further preferably 1 to 5 from the same viewpoint.

In addition, in the composition of the present embodiment, R¹² is preferably a hydrogen atom or a substituted or unsubstituted monovalent aliphatic hydrocarbon group having 1 to 30 carbon atoms, more preferably a hydrogen atom or a substituted or unsubstituted monovalent aliphatic saturated hydrocarbon group having 1 to 30 carbon atoms, further preferably a hydrogen atom or an unsubstituted monovalent aliphatic saturated hydrocarbon group having 1 to 30 carbon atoms, still further preferably a hydrogen atom or a linear alkyl group having 1 to 30 carbon atoms from the viewpoint that a composition allowing for formation of a dispersion further excellent in stability under an acidic condition is obtained. In addition, in the composition of the present embodiment, when R¹² is a substituted or unsubstituted monovalent aliphatic hydrocarbon group having 1 to 30 carbon atoms, the number of carbon atoms in R¹² is preferably 1 to 10, more preferably 1 to 5, further preferably 1 to 2, particularly preferably 1 from the same viewpoint.

In addition, in the composition of the present embodiment, R¹³, R¹⁴, R¹⁵ and R¹⁶ are each independently preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. In addition, in the composition of the present embodiment, the number of carbon atoms in each of R¹³, R¹⁴, R¹⁵ and R¹⁶ is independently preferably 1 to 10, more preferably 1 to 5, further preferably 1 to 2, particularly preferably 1 from the same viewpoint.

Herein, in the composition of the present embodiment, R¹⁸ is preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. Furthermore, the number of carbon atoms in R¹⁸ is preferably 5 to 27, more preferably 7 to 23, further preferably 9 to 21 from the same viewpoint.

Specific examples of the compound represented by the general formula (11) include Compounds No. 1 to No. 12 described above. However, the compound represented by the general formula (11) is not limited to the following compounds.

The compound represented by the general formula (11) can be produced by, for example, a method including reacting an ester of 2,2,6,6-tetramethylpiperidin-4-ol and (meth)acrylic acid with an epoxy compound such as alkyl glycidyl ether in the presence of a catalyst such as zinc chloride.

In addition, in the composition of the present embodiment, the compound represented by the general formula (1) may be a compound represented by the following general formula (21).

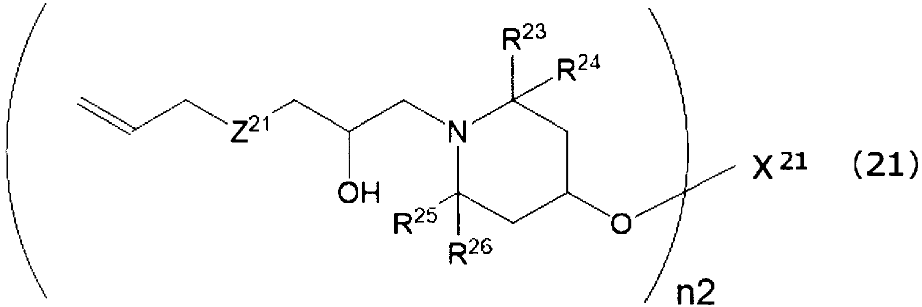

Here, in the general formula (21), n2 represents 1 or 2, in which, when n2 is 1, X²¹ represents a substituted or unsubstituted monovalent hydrocarbon group having 1 to 30 carbon atoms, a group represented by -C(=O)-R²⁷ or a group represented by the following general formula (22), or when n2 is 2, X²¹ represents a substituted or unsubstituted divalent hydrocarbon group having 1 to 30 carbon atoms, a group represented by -C(=O)-Y²¹-C(=O)-or a -C(=O)- group and Y²¹ represents a single bond or a substituted or unsubstituted divalent hydrocarbon group having 1 to 30 carbon atoms, Z²¹ represents a single bond or an oxygen atom, and R²³, R²⁴, R²⁵, R²⁶ and R²⁷ each independently represent a substituted or unsubstituted monovalent hydrocarbon group having 1 to 30 carbon atoms.

Herein, in the present embodiment, "Z²¹ represents a single bond" indicates that Z²¹ does not have any atom and two atoms linked with Z²¹ in the general formula (21) are directly bound. In addition, "Y²¹ represents a single bond" indicates that Y²¹ does not have any atom and two atoms linked with Y²¹ are directly bound.

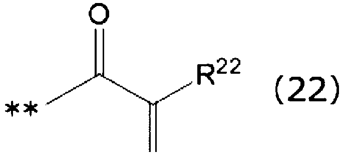

Here, in the general formula (22), ** represents a moiety bound with an oxygen atom, and R²² represents a hydrogen atom or a substituted or unsubstituted monovalent hydrocarbon group having 1 to 30 carbon atoms.

Examples of the substituted or unsubstituted monovalent hydrocarbon group having 1 to 30 carbon atoms, represented by R²², R²³, R²⁴, R²⁵, R²⁶ and R²⁷ in the general formula (21) and the general formula (22), include those which are the same as those exemplified as the substituted or unsubstituted monovalent hydrocarbon group having 1 to 30 carbon atoms, represented by R¹, R², R³, R⁴, R⁵, R⁶, R⁷ and R⁸ in the general formula (1).

Examples of the substituted or unsubstituted monovalent hydrocarbon group having 1 to 30 carbon atoms, represented by X²¹ in the general formula (21), include those which are the same as those exemplified as the substituted or unsubstituted monovalent hydrocarbon group having 1 to 30 carbon atoms, represented by R¹, R², R³, R⁴, R⁵, R⁶, R⁷ and R⁸ in the general formula (1).

Examples of the substituted or unsubstituted divalent hydrocarbon group having 1 to 30 carbon atoms, represented by X²¹ in the general formula (21), include those which are the same as those exemplified as the substituted or unsubstituted divalent hydrocarbon group having 1 to 30 carbon atoms, represented by X¹ in the general formula (1).

Examples of the substituted or unsubstituted divalent hydrocarbon group having 1 to 30 carbon atoms, represented by Y²¹ in the general formula (21), include those which are the same as those exemplified as the substituted or unsubstituted divalent hydrocarbon group having 1 to 30 carbon atoms, represented by X¹ in the general formula (1).

In the composition of the present embodiment, Z²¹ in the general formula (21) is preferably an oxygen atom. In this case, the compound represented by the general formula (21) is further enhanced in hydrophilicity and the composition of the present embodiment allows for formation of a dispersion further excellent in stability under an acidic condition.

When n2 is 1, X²¹ is preferably a group represented by -C(=O)-R²⁷ or the group represented by the general formula (22) from the viewpoint that a composition allowing for formation of a dispersion further excellent in stability under an acidic condition is obtained. In addition, when n2 is 2, X²¹ is preferably a group represented by -C(=O)-Y²¹-C(=O)- or a - C(=O)- group, more preferably a group represented by -C(=O)-Y²¹-C(=O)- from the same viewpoint. Furthermore, when n2 is 1, X²¹ is particularly preferably a group represented by - C(=O)-R²⁷ from the viewpoint that the degree of crosslinking of a polymer obtained by polymerizing a monomer component containing the compound represented by the general formula (21) is moderately adjusted and, when the composition is used as a component of a coating material composition, the coating material composition is excellent in film formability.

Y²¹ is preferably a divalent hydrocarbon group having 1 to 30 carbon atoms, more preferably a divalent saturated hydrocarbon group having 1 to 30 carbon atoms, further preferably a linear alkanediyl group having 1 to 30 carbon atoms, still further preferably an alkylene group having 1 to 30 carbon atoms from the viewpoint that a composition allowing for formation of a dispersion further excellent in stability under an acidic condition is obtained. Furthermore, the number of carbon atoms in Y²¹ is preferably 2 to 16, more preferably 4 to 14, further preferably 6 to 12 from the same viewpoint.

In addition, n2 is preferably 1 from the viewpoint that a composition allowing for formation of a dispersion further excellent in stability under an acidic condition is obtained.

In addition, in the composition of the present embodiment, R²² is preferably a hydrogen atom or a substituted or unsubstituted monovalent aliphatic hydrocarbon group having 1 to 30 carbon atoms, more preferably a hydrogen atom or a substituted or unsubstituted monovalent aliphatic saturated hydrocarbon group having 1 to 30 carbon atoms, further preferably a hydrogen atom or an unsubstituted monovalent aliphatic saturated hydrocarbon group having 1 to 30 carbon atoms, still further preferably a hydrogen atom or a linear alkyl group having 1 to 30 carbon atoms from the viewpoint that a composition allowing for formation of a dispersion further excellent in stability under an acidic condition is obtained. In addition, in the composition of the present embodiment, when R²² is a substituted or unsubstituted monovalent aliphatic hydrocarbon group having 1 to 30 carbon atoms, the number of carbon atoms in R²² is preferably 1 to 10, more preferably 1 to 5, further preferably 1 to 2, particularly preferably 1 from the same viewpoint.

Furthermore, in the composition of the present embodiment, R²³, R²⁴, R²⁵ and R²⁶ are each independently preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. In addition, in the composition of the present embodiment, the number of carbon atoms in each of R²³, R²⁴, R²⁵ and R²⁶ is independently preferably 1 to 10, more preferably 1 to 5, further preferably 1 to 2, particularly preferably 1 from the same viewpoint.

Herein, in the composition of the present embodiment, R²⁷ is preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms from the viewpoint that a composition allowing for formation of a dispersion further excellent in stability under an acidic condition is obtained. Furthermore, the number of carbon atoms in R²⁷ is preferably 5 to 27, more preferably 7 to 23, further preferably 9 to 21 from the same viewpoint.

Specific examples of the compound represented by the general formula (21) include Compounds No. 13 to No. 28 described above. However, the compound represented by the general formula (21) is not limited to the above compounds.

The compound represented by the general formula (21) can be produced by, for example, a method including reacting an ester of 2,2,6,6-tetramethylpiperidin-4-ol and a monovalent or divalent carboxylic acid with an epoxy compound such as allyl glycidyl ether in the presence of a catalyst such as zinc chloride.

The content of the compound represented by the general formula (1) relative to the entire monomer component forming the polymer is not particularly limited, and can be, for example, 0.01 to 100% by mass. The content of the compound represented by the general formula (1) relative to the entire monomer component is preferably 0.1 to 50% by mass from the viewpoint that a composition allowing for formation of a dispersion further excellent in stability under an acidic condition is obtained and from the viewpoint that a composition is obtained which, when used as a component of a coating material composition, can impart more excellent light resistance to a coating film obtained by coating with the coating material composition.

The content of the compound represented by the general formula (1) relative to the entire monomer component can be here 0.01 to 10% by mass, preferably 0.1% by mass or greater and less than 10% by mass, more preferably 0.3 to 5% by mass, further preferably 0.5 to 3% by mass. In this case, the composition of the present embodiment is suitable particularly as a vehicle for a coating material.

The content of the compound represented by the general formula (1) relative to the entire monomer component can be 10 to 100% by mass, preferably greater than 10% by mass and 100% by mass or less, more preferably 20 to 80% by mass, further preferably 30 to 50% by mass. In this case, the composition of the present embodiment is suitable particularly as a light stabilizer for a coating material.

Examples of a compound which is the monomer component forming the polymer and which is other than the compound represented by the general formula (1) include (meth)acrylate, (meth)acrylic acid, ethylene, propylene, 1-butene, butadiene, chloroethylene, styrene-based monomer, acrylonitrile, vinyl acetate, a reactive emulsifier having a double bond in its molecule, a silane coupling agent having a double bond in its molecule, and an ultraviolet absorber having a double bond in its molecule. These may be used singly or in combination of two or more kinds thereof.

The monomer component forming the polymer in the composition of the present embodiment preferably includes a reactive emulsifier. In this case, the composition allows for formation of a dispersion further excellent in stability under an acidic condition.

Examples of the reactive emulsifier include reactive emulsifiers described in JP S49-46291 B, JP S58-203960 A, JP S61-222530 A, JP S62-100502 A, JP S62-104802 A, JP S62-11534 A, JP S63-23725 A, JP S63-91130 A, JP S63-319035 A, JP H04-256429 A, JP H04-50202 A, JP H04-50204 A, JP H06-239908 A, JP H08-041113 A, JP H09-031113 A, JP H10-120712 A, JP 2002-265505 A, JP 2002-275115 A, JP 2002-301353 A, JP 2003-128709 A, JP 2020-117668 A, and the like, and these technical contents are appropriately incorporated and serve as one portion of the present specification.

When the monomer component forming the polymer in the composition of the present embodiment includes a reactive emulsifier, the content of the reactive emulsifier relative to the entire monomer component can be, for example, 0.1 to 20% by mass. The content of the reactive emulsifier relative to the entire monomer component is preferably 0.5 to 15% by mass, more preferably 1 to 10% by mass, further preferably 2 to 5% by mass from the viewpoint that a composition allowing for formation of a dispersion further excellent in stability under an acidic condition is obtained.

The monomer component forming the polymer in the composition of the present embodiment preferably includes (meth)acrylate. In this case, the composition allows for formation of a dispersion further excellent in stability under an acidic condition.

The (meth)acrylate may be used singly or in combination of two or more kinds thereof. The (meth)acrylate used here is preferably a combination of acrylate and methacrylate from the viewpoint that, when the composition of the present embodiment is used as a component of a coating material composition, the coating material composition is excellent in film formability.

Examples of the (meth)acrylate include methyl acrylate, ethyl acrylate, propyl acrylate, isopropyl acrylate, butyl acrylate, isobutyl acrylate, hexyl acrylate, 2-ethylhexyl acrylate, cyclohexyl acrylate, 2-hydroxyethyl acrylate, 2-hydroxypropyl acrylate, 4-hydroxybutyl acrylate, methyl methacrylate, ethyl methacrylate, propyl methacrylate, isopropyl methacrylate, butyl methacrylate, isobutyl methacrylate, hexyl methacrylate, 2-ethylhexyl methacrylate, cyclohexyl methacrylate, 2-hydroxyethyl methacrylate, 2-hydroxypropyl methacrylate, and 4-hydroxybutyl methacrylate. In particular, methyl acrylate, ethyl acrylate, propyl acrylate, isopropyl acrylate, butyl acrylate, isobutyl acrylate, hexyl acrylate, 2-ethylhexyl acrylate, methyl methacrylate, ethyl methacrylate, propyl methacrylate, isopropyl methacrylate, butyl methacrylate, isobutyl methacrylate, hexyl methacrylate, and 2-ethylhexyl methacrylate are preferred, a combination of at least one selected from the group consisting of methyl acrylate, ethyl acrylate, propyl acrylate, isopropyl acrylate, butyl acrylate, isobutyl acrylate, hexyl acrylate and 2-ethylhexyl acrylate and at least one selected from the group consisting of methyl methacrylate, ethyl methacrylate, propyl methacrylate, isopropyl methacrylate, butyl methacrylate, isobutyl methacrylate, hexyl methacrylate and 2-ethylhexyl methacrylate is more preferred, a combination of at least one selected from the group consisting of butyl acrylate, isobutyl acrylate, hexyl acrylate and 2-ethylhexyl acrylate and at least one selected from the group consisting of methyl methacrylate and ethyl methacrylate is further preferred, and a combination of at least one selected from the group consisting of butyl acrylate, hexyl acrylate and 2-ethylhexyl acrylate, and methyl methacrylate is still further preferred, from the viewpoint that a composition allowing for formation of a dispersion further excellent in stability under an acidic condition is obtained.

The monomer component forming the polymer in the composition of the present embodiment preferably includes a styrene-based monomer. In this case, the composition allows for formation of a dispersion further excellent in stability under an acidic condition.

Examples of the styrene-based monomer include styrene, α-alkylstyrene such as α-methylstyrene, alkylstyrene such as vinyl toluene, and halostyrene such as chlorostyrene.

The monomer component forming the polymer in the composition of the present embodiment preferably includes both (meth)acrylate and a styrene-based monomer. In this case, the composition allows for formation of a dispersion further excellent in stability under an acidic condition.

When the monomer component forming the polymer in the composition of the present embodiment includes (meth)acrylate, the content of the (meth)acrylate relative to the entire monomer component can be, for example, 0.1 to 99.9% by mass. The content of the (meth)acrylate relative to the entire monomer component is preferably 20 to 99% by mass, more preferably 40 to 98% by mass, further preferably 80 to 97% by mass, still further preferably 90 to 96% by mass from the viewpoint that a composition allowing for formation of a dispersion further excellent in stability under an acidic condition is obtained.

The monomer component forming the polymer in the composition of the present embodiment preferably includes a monomer having an acidic functional group. In this case, when the composition is used as a component of a coating material composition, adhesiveness of a coating film obtained by coating with the coating material composition with a substrate to be coated is excellent. In addition, in this case, when the composition is used as a component of a coating material composition including a colorant such as a pigment, dispersion stability of the colorant in the coating material composition is excellent.

Examples of the monomer having an acidic functional group include (meth)acrylic acid, maleic acid, fumaric acid, and styrenesulfonic acid. These may be used singly or in combination of two or more kinds thereof. In particular, (meth)acrylic acid is preferred and acrylic acid is more preferred from the viewpoint that, when the composition is used as a component of a coating material composition, adhesiveness of a coating film obtained by coating with the coating material composition with a substrate to be coated is further excellent.

When the monomer component forming the polymer in the composition of the present embodiment includes a monomer having an acidic functional group, the content of the monomer having an acidic functional group relative to the entire monomer component can be, for example, 0.01 to 20% by mass. The content of the monomer having an acidic functional group relative to the entire monomer component is preferably 0.05 to 10% by mass, more preferably 0.1 to 8% by mass, further preferably 0.5 to 5% by mass, still further preferably 1 to 3% by mass from the viewpoint that, when the composition is used as a component of a coating material composition, adhesiveness of a coating film obtained by coating with the coating material composition with a substrate to be coated is further excellent.

The weight average molecular weight of the polymer in the composition of the present embodiment is not particularly limited, and may be, for example, 2,000 to 5,000,000. Herein, in the present embodiment, "weight average molecular weight" is a weight average molecular weight in terms of standard polystyrene, as measured by a gel permeation chromatography (GPC) method.

The polymer in the composition of the present embodiment may have a single-layer structure or a multi-layer structure such as a core-shell structure. The volume average particle size of the polymer in the composition of the present embodiment is not particularly limited, and may be, for example, 50 to 1000 nm. Herein, in the present embodiment, "volume average particle size" is a volume average particle size measured by particle size distribution measurement according to a dynamic light-scattering method.

### (Aqueous dispersion medium)

As described above, the composition of the present embodiment includes an aqueous dispersion medium. Examples of such a water-based dispersion medium include water, or a mixture of water and a water-soluble organic solvent. The water-soluble organic solvent here refers to an organic solvent miscible with water, and examples thereof include acetone, methyl ethyl ketone, ethylene glycol, propylene glycol, methyl alcohol, ethyl alcohol, and isopropyl alcohol. These may be used singly or in combination of two or more kinds thereof. The aqueous dispersion medium included in the composition of the present embodiment is preferably water from the viewpoint of handleability and an environmental load.

The composition of the present embodiment preferably further includes an emulsifier other than the above reactive emulsifier. In this case, the composition allows for formation of a dispersion further excellent in stability under an acidic condition.

Examples of the emulsifier other than the reactive emulsifier include anionic surfactants such as a fatty acid metal salt and an alkylsulfonic acid metal salt, nonionic surfactants such as polyoxyalkylene alkyl ethers, cationic surfactants such as an alkyltrimethylammonium salt, and amphoteric surfactants such as a carboxy betaine-based surfactant. When the composition of the present embodiment incudes the emulsifier other than the reactive emulsifier, the content of such other emulsifier can be, for example, 0.01 to 20 parts by mass based on 100 parts by mass of the polymer, and is preferably 0.1 to 15 parts by mass, more preferably 1 to 10 parts by mass, further preferably 2 to 5 parts by mass based on 100 parts by mass of the polymer from the viewpoint that a composition allowing for formation of a dispersion further excellent in stability under an acidic condition is obtained.

The amount of the non-volatile content in the composition of the present embodiment can be, for example, 10 to 80% by mass, and is preferably 20 to 70% by mass, more preferably 30 to 60% by mass from the viewpoint of productivity and handleability. The amount (% by mass) of the non-volatile content in the composition can be determined by weighing 1 g of the composition, drying the component at a temperature of 110°C with a hot-air dryer for 1 hour, measuring the mass (g) of the resulting residue, and multiplying the mass by 100.

Herein, in the composition of the present embodiment, the polymer is preferably dispersed in the aqueous dispersion medium. In this case, the composition of the present embodiment can be further suitably used as a component of a coating material composition.

Next, a method for producing a composition of the present embodiment is described.

### <Method for producing composition>

The method for producing a composition of the present embodiment includes a dispersing step of dispersing a polymer obtained by polymerizing a monomer component containing the compound represented by the general formula (1), in an aqueous dispersion medium.

According to the method for producing a composition of the present embodiment, it is possible to produce a composition allowing for formation of a dispersion excellent in stability under an acidic condition.

The dispersing step in the method for producing a composition of the present embodiment preferably includes a step of emulsion-polymerizing the monomer component containing the compound represented by the general formula (1) in the aqueous dispersion medium. In this case, the particle size of the polymer can be easily controlled by polymerization conditions, and a polymer exhibiting a narrow particle size distribution can be obtained.

The method for producing a composition of the present embodiment may include a step of polymerizing the monomer component containing the compound represented by the general formula (1) by a radical polymerization method other than emulsion polymerization. Examples of such a production method include a method including radical-polymerizing the monomer component containing the compound represented by the general formula (1) in an organic solvent such as xylene, then removing the organic solvent to isolate a polymer, and dispersing the resulting polymer in the aqueous dispersion medium.

A polymerization initiator used for polymerization of the monomer component containing the compound represented by the general formula (1) in the method for producing a composition of the present embodiment is not particularly limited, and a known radical polymerization initiator can be used. Examples of such a polymerization initiator include ferrous sulfate, persulfates such as ammonium persulfate, potassium persulfate and sodium persulfate, bisulfites such as potassium bisulfite and sodium bisulfite, sulfites such as potassium sulfite and sodium sulfite, peroxides such as benzoyl peroxide, lauryl peroxide, methyl ethyl ketone peroxide, dicumyl peroxide, t-butyl hydroperoxide, hydrogen peroxide, cumene hydroperoxide, tert-butylperoxy-2-ethylhexanoate and t-butylperoxy isobutyrate, and azo compounds such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile) and 2-phenylazo-4-methoxy-2,4-dimethylvaleronitrile. These may be used singly or in combination of two or more kinds thereof. The amount of the polymerization initiator used is not particularly limited, and can be, for example, 0.01 to 20 parts by mass based on 100 parts by mass in total of the monomer component containing the compound represented by the general formula (1), and is preferably 0.05 to 10 parts by mass, more preferably 0.1 to 5 parts by mass, further preferably 0.5 to 2.5 parts by mass from the viewpoint of an enhancement in controllability of the polymerization reaction.

The monomer component containing the compound represented by the general formula (1) may be polymerized in the co-existence with a chain transfer agent in the method for producing a composition of the present embodiment. In this case, the degree of crosslinking of the polymer can be reduced, and, when the composition is used as a component of a coating material composition, film formability of the coating material composition is excellent. Examples of the chain transfer agent include mercaptan compounds such as n-dodecylmercaptan, tert-dodecylmercaptan, n-octylmercaptan, n-tetradecylmercaptan, n-hexylmercaptan and n-butylmercaptan, halogen compounds such as carbon tetrachloride and ethylene bromide, disulfide compounds such as diphenyl disulfide, and α-methylstyrene dimers. These may be used singly or in combination of two or more kinds thereof. The amount of the chain transfer agent used is not particularly limited, and can be, for example, 0.01 to 10 parts by mass based on 100 parts by mass in total of the monomer component containing the compound represented by the general formula (1).

Next, a coating material composition of the present embodiment is described.

### <Coating material composition>

The coating material composition of the present embodiment includes a polymer obtained by polymerizing a monomer component containing the compound represented by the general formula (1).

The coating material composition of the present embodiment allows for formation of a dispersion excellent in stability under an acidic condition. A coating film obtained by coating with the coating material composition of the present embodiment has excellent light resistance.

The coating material composition of the present embodiment can include an aqueous dispersion medium. In other words, the coating material composition of the present embodiment can include the above composition.

The content of the polymer obtained by polymerizing the monomer component containing the compound represented by the general formula (1) in the coating material composition of the present embodiment is not particularly limited, and can be, for example, 0.01 to 100% by mass.

The coating material composition may further include, if necessary, a pigment, a plasticizer, a film formation aid, a preservative agent, a fungicide, a defoamer, a thickener (viscosity modifier), a leveling agent, a dispersant, an anti-settling agent, a heat resistance enhancer, a skinning preventing agent, a slip agent, a drying agent, an anti-sagging agent, a flatting agent, a light stabilizer, an antioxidant, an ultraviolet absorber, and/or the like.

The coating material composition of the present embodiment can be suitably used, for example, for coating automobile exterior members such as bumpers, radiator grilles, front grilles, front panels, fenders, pillars, pillar covers, door mirror stay covers, glass run channels, door mirror housings, lamp housings, wheel covers, spoilers, air spoilers, weatherstrips, window malls, belt malls, sunroofs, frontend modules, door modules, backdoor modules, and outside plates, building components such as roofs, walls, flooring, and window frames, and housings for electric appliances such as refrigerators, washing machines, and cleaners.

Next, an article of the present embodiment is described.

### <Article>

The article of the present embodiment includes the coating film obtained by coating with the above coating material composition.

The article of the present embodiment has excellent light resistance.

The article of the present embodiment may be, for example, one including a substrate, the coating film being laminated on the substrate. The article of the present embodiment may be one including a substrate, and one layer, or two or more undercoating layers laminated on the substrate, the coating film being laminated on the undercoating layer(s). Furthermore, the article of the present embodiment may be one including one layer, or two or more coating layers on the coating film.

Examples of the material of the substrate of the article include metals such as zinc plated steel, zinc alloy plated steel, stainless steel, tin plated steel, Galvalume and an aluminum alloy, synthetic resins such as an acrylic resin, a polycarbonate resin, a polyester resin, a polystyrene resin, an ABS resin, an AS resin, a vinyl chloride resin, a polyamide resin, a polyarylate resin, an acrylimide resin and a polyallyl diglycol carbonate resin, as well as glass, crockery, concrete, wood, and a siding board.

The coating film can be formed by, for example, a method including a step of applying the above coating material composition onto a substrate or an undercoating layer. Examples of the method for applying the coating material composition include known methods such as brush coating, bar coating, spray coating, dip coating, spin coating, and curtain coating.

The thickness of the coating film is not particularly limited, and may be, for example, 10 to 300 µm.

Specific examples of the article of the present embodiment include automobile exterior members such as bumpers, radiator grilles, front grilles, front panels, fenders, pillars, pillar covers, door mirror stay covers, glass run channels, door mirror housings, lamp housings, wheel covers, spoilers, air spoilers, weatherstrips, window malls, belt malls, sunroofs, frontend modules, door modules, backdoor modules, and outside plates, building components such as roofs, walls, flooring, and window frames, and housings for electric appliances such as refrigerators, washing machines, and cleaners.

Next, a light stabilizer monomer component of the present embodiment is described.

### <Light stabilizer monomer component>

The light stabilizer monomer component of the present embodiment is to be used for a composition including a light stabilizer polymer obtained by polymerizing a light stabilizer monomer component, and an aqueous dispersion medium. The light stabilizer monomer component of the present embodiment includes the compound represented by the general formula (1).

The light stabilizer monomer component of the present embodiment is used, thereby obtaining a composition allowing for formation of a dispersion excellent in stability under an acidic condition.

Next, a light stabilizer polymer of the present embodiment is described.

### <Light stabilizer polymer>

The light stabilizer polymer of the present embodiment is to be used in a composition including a light stabilizer polymer and an aqueous dispersion medium. The light stabilizer polymer of the present embodiment is obtained by polymerizing a light stabilizer monomer component including the compound represented by the general formula (1).

The light stabilizer polymer of the present embodiment is used, thereby obtaining a composition allowing for formation of a dispersion excellent in stability under an acidic condition.

Examples of further embodiments of the present invention include the following.
[1] A composition including:
   a polymer obtained by polymerizing a monomer component containing a compound represented by the following general formula (1); and
   an aqueous dispersion medium, 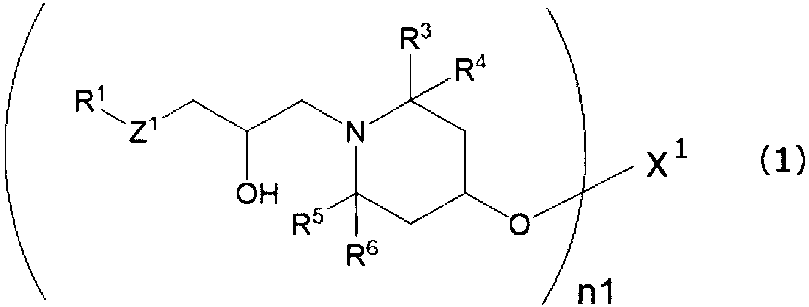 wherein
   in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 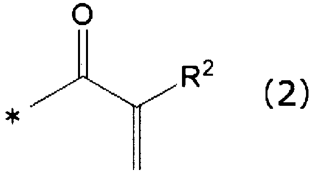
   in the general formula (2), * represents a moiety bound with an oxygen atom, and R² represents a hydrogen atom or a substituted or unsubstituted monovalent hydrocarbon group having 1 to 30 carbon atoms.
[2] The composition according to [1], wherein Z¹ is an oxygen atom.
[3] The composition according to [1] or [2], wherein n1 is 1.
[4] The composition according to [3], wherein X¹ is a group represented by -C(=O)-R⁷ or the group represented by the general formula (2).
[5] The composition according to any of [1] to [4], wherein R² is a hydrogen atom or a substituted or unsubstituted monovalent aliphatic hydrocarbon group having 1 to 30 carbon atoms, preferably a hydrogen atom or a substituted or unsubstituted monovalent aliphatic saturated hydrocarbon group having 1 to 30 carbon atoms, more preferably a hydrogen atom or an unsubstituted monovalent aliphatic saturated hydrocarbon group having 1 to 30 carbon atoms, further preferably a hydrogen atom or a linear alkyl group having 1 to 30 carbon atoms.
[6] The composition according to any of [1] to [5], wherein the number of carbon atoms in R² is 1 to 10, preferably 1 to 5, more preferably 1 to 2, further preferably 1.
[7] The composition according to [1] or [2], wherein n1 is 2.
[8] The composition according to [7], wherein X¹ is a group represented by -C(=O)-Y¹-C(=O)- or a -C(=O)- group, more preferably a group represented by -C(=O)-Y¹-C(=O)-.
[9] The composition according to [8], wherein Y¹ is a divalent hydrocarbon group having 1 to 30 carbon atoms, preferably a divalent saturated hydrocarbon group having 1 to 30 carbon atoms, more preferably a linear alkanediyl group having 1 to 30 carbon atoms, further preferably an alkylene group having 1 to 30 carbon atoms.
[10] The composition according to [8] or [9], wherein Y¹ has 2 to 16, preferably 4 to 14, more preferably 6 to 12 carbon atoms.
[11] The composition according to any of [1] to [10], wherein R¹ is a substituted or unsubstituted monovalent hydrocarbon group having 1 to 30 carbon atoms, preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms.
[12] The composition according to [11], wherein the number of carbon atoms in R¹ is 1 to 20, preferably 1 to 10, more preferably 1 to 5.
[13] The composition according to any of [1] to [10], wherein R¹ is a substituted or unsubstituted monovalent aliphatic unsaturated hydrocarbon group having 2 to 30 carbon atoms, preferably an unsubstituted monovalent aliphatic unsaturated hydrocarbon group having 2 to 30 carbon atoms, more preferably a linear alkenyl group having 2 to 30 carbon atoms, further preferably a linear alkenyl group having 2 to 10 carbon atoms, still further preferably a vinyl group, a 2-propenyl group, a 2-butenyl group or a 3-butenyl group, particularly preferably a 2-propenyl group.
[14] The composition according to any of [1] to [13], wherein R³, R⁴, R⁵ and R⁶ are each independently a substituted or unsubstituted monovalent aliphatic hydrocarbon group having 1 to 30 carbon atoms, preferably a substituted or unsubstituted monovalent aliphatic saturated hydrocarbon group having 1 to 30 carbon atoms, more preferably an unsubstituted monovalent aliphatic saturated hydrocarbon group having 1 to 30 carbon atoms, further preferably a linear alkyl group having 1 to 30 carbon atoms.
[15] The composition according to [14], wherein the number of carbon atoms in each of R³, R⁴, R⁵ and R⁶ is independently 1 to 10, preferably 1 to 5, more preferably 1 to 2, further preferably 1.
[16] The composition according to any of [1] to [15], wherein only any one of X¹ and R¹ is a group containing a vinyl group.
[17] The composition according to [1], wherein the compound represented by the general formula (1) is any of Compounds No. 1 to No. 28 described above.
[18] The composition according to [1], wherein the compound represented by the general formula (1) is a compound represented by the following general formula (11): 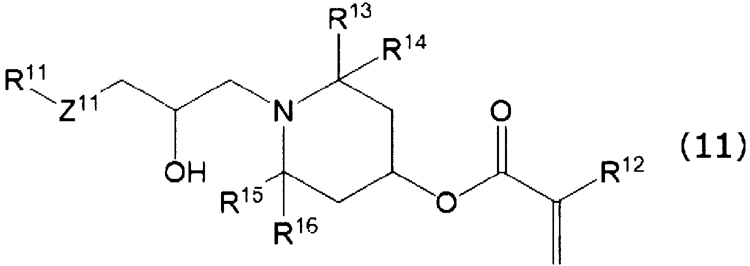 wherein in the general formula (11), Z¹¹ represents a single bond or an oxygen atom, R¹¹ represents a substituted or unsubstituted monovalent hydrocarbon group having 1 to 30 carbon atoms or a group represented by -C(=O)-R¹⁸, R¹² represents a hydrogen atom or a substituted or unsubstituted monovalent hydrocarbon group having 1 to 30 carbon atoms, and R¹³, R¹⁴, R¹⁵, R¹⁶ and R¹⁸ each independently represent a substituted or unsubstituted monovalent hydrocarbon group having 1 to 30 carbon atoms.
[19] The composition according to [18], wherein Z¹¹ is an oxygen atom.
[20] The composition according to [18] or [19], wherein R¹¹ is a substituted or unsubstituted monovalent hydrocarbon group having 1 to 30 carbon atoms, preferably a substituted or unsubstituted monovalent aliphatic hydrocarbon group having 1 to 30 carbon atoms, more preferably a substituted or unsubstituted monovalent aliphatic saturated hydrocarbon group having 1 to 30 carbon atoms, further preferably an unsubstituted monovalent aliphatic saturated hydrocarbon group having 1 to 30 carbon atoms, still further preferably a linear alkyl group having 1 to 30 carbon atoms.
[21] The composition according to [20], wherein the number of carbon atoms in R¹¹ is 1 to 20, preferably 1 to 10, more preferably 1 to 5.
[22] The composition according to any of [18] to [21], wherein R¹² is a hydrogen atom or a substituted or unsubstituted monovalent aliphatic hydrocarbon group having 1 to 30 carbon atoms, preferably a hydrogen atom or a substituted or unsubstituted monovalent aliphatic saturated hydrocarbon group having 1 to 30 carbon atoms, more preferably a hydrogen atom or an unsubstituted monovalent aliphatic saturated hydrocarbon group having 1 to 30 carbon atoms, further preferably a hydrogen atom or a linear alkyl group having 1 to 30 carbon atoms.
[23] The composition according to [22], wherein the number of carbon atoms in R¹² is 1 to 10, preferably 1 to 5, more preferably 1 to 2, further preferably 1.
[24] The composition according to any of [18] to [23], wherein R¹³, R¹⁴, R¹⁵ and R¹⁶ are each independently a substituted or unsubstituted monovalent aliphatic hydrocarbon group having 1 to 30 carbon atoms, preferably a substituted or unsubstituted monovalent aliphatic saturated hydrocarbon group having 1 to 30 carbon atoms, more preferably an unsubstituted monovalent aliphatic saturated hydrocarbon group having 1 to 30 carbon atoms, further preferably a linear alkyl group having 1 to 30 carbon atoms.
[25] The composition according to [24], wherein the number of carbon atoms in each of R¹³, R¹⁴, R¹⁵ and R¹⁶ is independently 1 to 10, preferably 1 to 5, more preferably 1 to 2, further preferably 1.
[26] The composition according to [18], wherein the compound represented by the general formula (11) is any of Compounds No. 1 to No. 12 described above.
[27] The composition according to [1], wherein the compound represented by the general formula (1) is a compound represented by the following general formula (21), 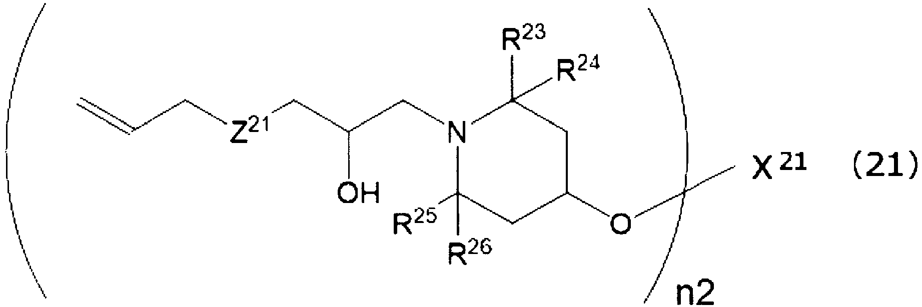 wherein
   in the general formula (21), n2 represents 1 or 2, in which, when n2 is 1, X²¹ represents a substituted or unsubstituted monovalent hydrocarbon group having 1 to 30 carbon atoms, a group represented by -C(=O)-R²⁷ or a group represented by the following general formula (22), or when n2 is 2, X²¹ represents a substituted or unsubstituted divalent hydrocarbon group having 1 to 30 carbon atoms, a group represented by -C(=O)-Y²¹-C(=O)-or a -C(=O)- group and Y²¹ represents a single bond or a substituted or unsubstituted divalent hydrocarbon group having 1 to 30 carbon atoms, Z²¹ represents a single bond or an oxygen atom, and R²³, R²⁴, R²⁵, R²⁶ and R²⁷ each independently represent a substituted or unsubstituted monovalent hydrocarbon group having 1 to 30 carbon atoms, and 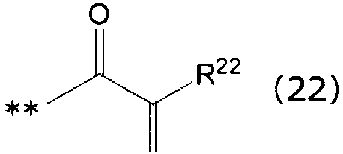
   in the general formula (22), ** represents a moiety bound with an oxygen atom, and R²² represents a hydrogen atom or a substituted or unsubstituted monovalent hydrocarbon group having 1 to 30 carbon atoms.
[28] The composition according to [27], wherein Z²¹ is an oxygen atom.
[29] The composition according to [27] or [28], wherein n2 is 1.
[30] The composition according to [29], wherein X²¹ is a group represented by -C(=O)-R²⁷ or the group represented by the general formula (22), preferably a group represented by - C(=O)-R²⁷.
[31] The composition according to [29] or [30], wherein R²² is a hydrogen atom or a substituted or unsubstituted monovalent aliphatic hydrocarbon group having 1 to 30 carbon atoms, preferably a hydrogen atom or a substituted or unsubstituted monovalent aliphatic saturated hydrocarbon group having 1 to 30 carbon atoms, more preferably a hydrogen atom or an unsubstituted monovalent aliphatic saturated hydrocarbon group having 1 to 30 carbon atoms, further preferably a hydrogen atom or a linear alkyl group having 1 to 30 carbon atoms.
[32] The composition according to [31], wherein the number of carbon atoms in R²² is 1 to 10, preferably 1 to 5, more preferably 1 to 2, further preferably 1.
[33] The composition according to [27] or [28], wherein n2 is 2.
[34] The composition according to [33], wherein X²¹ is a group represented by -C(=O)-Y²¹-C(=O)- or a -C(=O)- group, preferably a group represented by -C(=O)-Y²¹-C(=O)-.
[35] The composition according to [33] or [34], wherein Y²¹ is a divalent hydrocarbon group having 1 to 30 carbon atoms, preferably a divalent saturated hydrocarbon group having 1 to 30 carbon atoms, more preferably a linear alkanediyl group having 1 to 30 carbon atoms, further preferably an alkylene group having 1 to 30 carbon atoms.
[36] The composition according to [35], wherein the number of carbon atoms in Y²¹ is 2 to 16, preferably 4 to 14, more preferably 6 to 12.
[37] The composition according to any of [27] to [36], wherein R²³, R²⁴, R²⁵ and R²⁶ are each independently a substituted or unsubstituted monovalent aliphatic hydrocarbon group having 1 to 30 carbon atoms, preferably a substituted or unsubstituted monovalent aliphatic saturated hydrocarbon group having 1 to 30 carbon atoms, more preferably an unsubstituted monovalent aliphatic saturated hydrocarbon group having 1 to 30 carbon atoms, further preferably a linear alkyl group having 1 to 30 carbon atoms.
[38] The composition according to [37], wherein the number of carbon atoms in each of R²³, R²⁴, R²⁵ and R²⁶ is independently 1 to 10, preferably 1 to 5, more preferably 1 to 2, further preferably 1.
[39] The composition according to [27], wherein the compound represented by the general formula (21) is any of Compounds No. 13 to No. 28 described above.
[40] The composition according to any of [1] to [39], wherein a content of the compound represented by the general formula (1) relative to the entire monomer component forming the polymer is 0.01 to 100% by mass, preferably 0.1 to 50% by mass.
[41] The composition according to any of [1] to [39], wherein a content of the compound represented by the general formula (1) relative to the entire monomer component forming the polymer is 0.1 to 10% by mass, preferably 0.1% by mass or greater and less than 10% by mass, more preferably 0.3 to 5% by mass, further preferably 0.5 to 3% by mass.
[42] The composition according to any of [1] to [39], wherein a content of the compound represented by the general formula (1) relative to the entire monomer component forming the polymer is 10 to 100% by mass, preferably more than 10% by mass and 100% by mass or less, more preferably 20 to 80% by mass, further preferably 30 to 50% by mass.
[43] The composition according to any of [1] to [42], wherein the monomer component forming the polymer contains a reactive emulsifier.
[44] The composition according to [43], wherein a content of the reactive emulsifier relative to the entire monomer component is 0.1 to 20% by mass, preferably 1 to 15% by mass, more preferably 2 to 10% by mass.
[45] The composition according to any of [1] to [44], wherein the monomer component forming the polymer contains (meth)acrylate.
[46] The composition according to any of [1] to [45], wherein the monomer component forming the polymer contains a styrene-based monomer.
[47] The composition according to any of [1] to [46], wherein the monomer component forming the polymer contains a monomer having an acidic functional group.
[48] The composition according to [47], wherein the monomer having an acidic functional group contains (meth)acrylic acid.
[49] The composition according to any of [1] to [48], wherein the aqueous dispersion medium is water.
[50] The composition according to any of [1] to [49], wherein the polymer is dispersed in the aqueous dispersion medium.
[51] A vehicle for a coating material, the vehicle including the composition according to any of [1] to [50].
[52] A light stabilizer for a coating material, the light stabilizer including the composition according to any of [1] to [50].
[53] A coating material composition including a polymer obtained by polymerizing a monomer component containing the compound represented by the general formula (1).
[54] The coating material composition according to [53], further including an aqueous dispersion medium.
[55] A coating material composition including the composition according to any of [1] to [50].
[56] A coating film obtained by coating with the coating material composition according to any of [53] to [55].
[57] An article including the coating film according to [56].
[58] A method for producing a composition, the method including a dispersing step of dispersing a polymer obtained by polymerizing a monomer component containing a compound represented by the following general formula (1), in an aqueous dispersion medium, 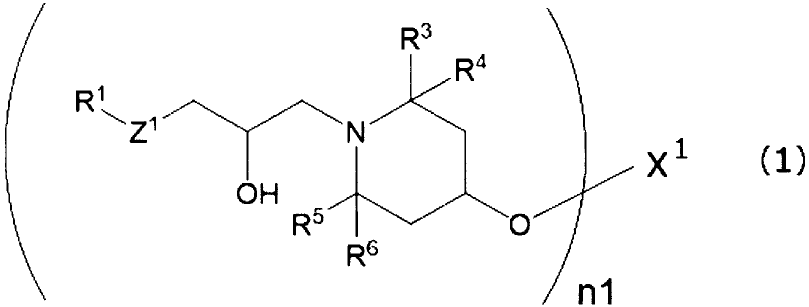 wherein
   in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 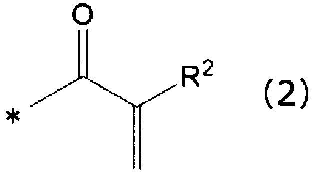
   in the general formula (2), * represents a moiety bound with an oxygen atom, and R² represents a hydrogen atom or a substituted or unsubstituted monovalent hydrocarbon group having 1 to 30 carbon atoms.
[59] The method for producing a composition according to [58], wherein the dispersing step includes a step of emulsion-polymerizing the monomer component containing the compound represented by the general formula (1) in the aqueous dispersion medium.
[60] A compound represented by the following general formula (1): 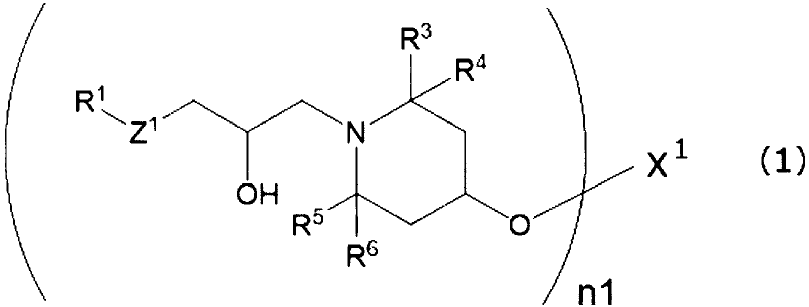 wherein
   in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 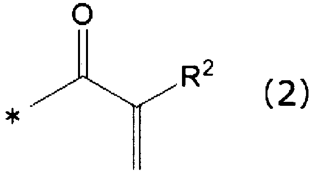
   in the general formula (2), * represents a moiety bound with an oxygen atom, and R² represents a hydrogen atom or a substituted or unsubstituted monovalent hydrocarbon group having 1 to 30 carbon atoms.
[61] A compound represented by the following general formula (11): 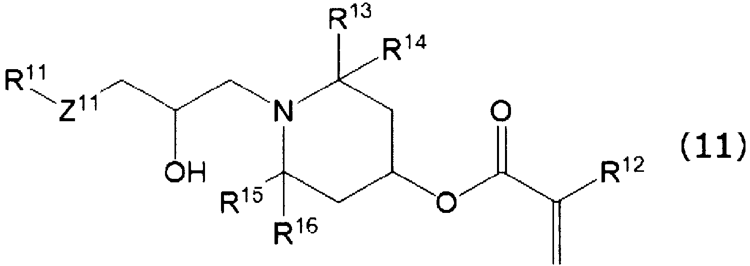 wherein in the general formula (11), Z¹¹ represents a single bond or an oxygen atom, R¹¹ represents a substituted or unsubstituted monovalent hydrocarbon group having 1 to 30 carbon atoms or a group represented by -C(=O)-R¹⁸, R¹² represents a hydrogen atom or a substituted or unsubstituted monovalent hydrocarbon group having 1 to 30 carbon atoms, and R¹³, R¹⁴, R¹⁵, R¹⁶ and R¹⁸ each independently represent a substituted or unsubstituted monovalent hydrocarbon group having 1 to 30 carbon atoms.
[62] A compound represented by the following general formula (21): 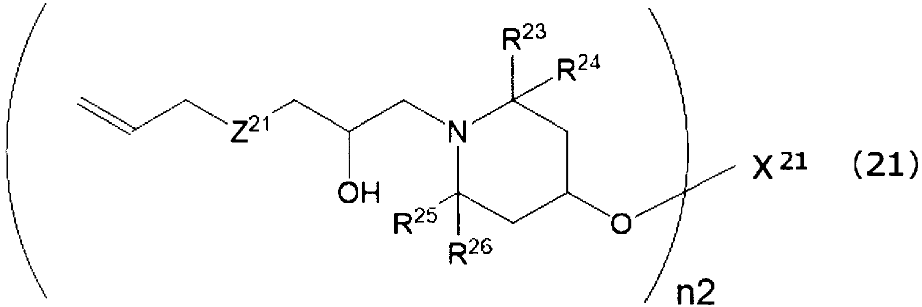 wherein
   in the general formula (21), n2 represents 1 or 2, in which, when n2 is 1, X²¹ represents a substituted or unsubstituted monovalent hydrocarbon group having 1 to 30 carbon atoms, a group represented by -C(=O)-R²⁷ or a group represented by the following general formula (22), or when n2 is 2, X²¹ represents a substituted or unsubstituted divalent hydrocarbon group having 1 to 30 carbon atoms, a group represented by -C(=O)-Y²¹-C(=O)- or a -C(=O)- group and Y²¹ represents a single bond or a substituted or unsubstituted divalent hydrocarbon group having 1 to 30 carbon atoms, Z²¹ represents a single bond or an oxygen atom, and R²³, R²⁴, R²⁵, R²⁶ and R²⁷ each independently represent a substituted or unsubstituted monovalent hydrocarbon group having 1 to 30 carbon atoms, and 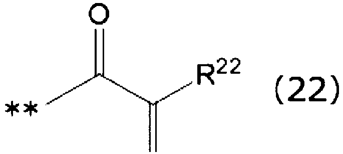
   in the general formula (22), ** represents a moiety bound with an oxygen atom, and R²² represents a hydrogen atom or a substituted or unsubstituted monovalent hydrocarbon group having 1 to 30 carbon atoms.
[63] A light stabilizer monomer component to be used for a composition including:
   a light stabilizer polymer obtained by polymerizing a light stabilizer monomer component; and
   an aqueous dispersion medium, wherein
   the light stabilizer monomer component includes the compound according to any of [60] to [62].
[64] A light stabilizer polymer obtained by polymerizing a light stabilizer monomer component including the compound according to any of [60] to [62].
[65] The light stabilizer polymer according to [64], wherein the light stabilizer polymer is to be used for a composition including:
   a light stabilizer polymer; and
   an aqueous dispersion medium.

The present invention is not limited to the above embodiments. The embodiments are illustrative, and any subject having substantially the same configuration and exerting the same function effects as in technical ideas described in the Claims of the present invention is encompassed in the technical scope of the present invention.

### EXAMPLES

Hereinafter, the present invention is more specifically described with reference to Examples, but the present invention is not restricted to the following Examples at all.

### <Synthesis of compound represented by general formula (1)>

### (Synthesis Example 1)

A 100-mL three-necked flask was loaded with 5 g of 2,2,6,6-tetramethylpiperidin-4-ol and 15 g of mixed xylene, and 3.7 g of methacrylic acid chloride was dropped with a dropping funnel under heating and stirring at 50°C in a nitrogen atmosphere. After completion of the dropping, a reaction mixture was heated and stirred at 80°C for 2 hours, and subsequently cooled to 50°C. The reaction mixture was neutralized by adding 0.35 g of sodium carbonate and 12 g of distilled water to the reaction mixture and further stirring them, thereafter the resultant was left to stand and separated into an aqueous phase and an organic phase, and the aqueous phase was removed. Subsequently, 12 g of distilled water was added to the organic phase and stirred, thereafter the resultant was left to stand and separated into an aqueous phase and an organic phase, and the aqueous phase was removed. Subsequently, 4.4 g of n-butyl glycidyl ether and 0.26 g of zinc chloride were added, heated and stirred at 140°C for 6 hours, and then cooled to 50°C. To the reaction mixture was added 12 g of distilled water, and stirred, thereafter the resultant was left to stand and separated into an aqueous phase and an organic phase, and the aqueous phase was removed. Subsequently, the organic phase was concentrated under reduced pressure with a rotary evaporator, and the residue was purified by silica gel column chromatography (developing solvent: hexane/acetone), to obtain 7.9 g of a light yellow liquid.

The light yellow liquid obtained was analyzed by ¹H-NMR (CDCl₃, 400 MHz). The analysis results are shown below.

(¹H-NMR)
δ (v.s.TMS): 6.09 (s, 1H), 5.55(s, 1H), 5.18 (m, 1H), 3.64 (m, 1H), 3.48 (d, 2H), 3.42 (t, 2H), 2.64 (d, 2H), 1.88-2.00 (m, 5H), 1.52-1.63 (m, 4H), 1.32-1.43 (m, 2H), 1.08-1.23 (m, 12H), 0.90-0.95 (t, 3H)

It was confirmed from the analysis results that the light yellow liquid obtained was 1-[3-(n-butyloxy)-2-hydroxypropyl]-2,2,6,6-tetramethylpiperidin-4-yl methacrylate (Compound No. 1).

### (Synthesis Example 2)

The same manner as in Synthesis Example 1 was performed to obtain 10.1 g of a light yellow liquid, except that 7.1 g of lauric acid chloride was used instead of the methacrylic acid chloride and 4.0 g of allyl glycidyl ether was used instead of the n-butyl glycidyl ether.

The light yellow liquid obtained was analyzed by ¹H-NMR (CDCl₃, 400 MHz). The analysis results are shown below.

(¹H-NMR)
δ (v.s.TMS): 5.94 (m, 1H), 5.28 (d, 1H), 5.18 (d, 1H), 5.11 (m, 1H), 4.04 (d, 2H) 3.65 (m, 1H), 3.43 (t, 2H), 2.64 (d, 2H), 2.27 (t, 2H), 1.88 (m, 2H), 1.45-1.66 (m, 5H), 1.22-1.44 (m, 15H), 1.02-1.22 (m, 12H), 0.88-0.95 (t, 3H)

It was confirmed from the analysis results that the light yellow liquid obtained was 1-[3-(allyloxy)-2-hydroxypropyl]-2,2,6,6-tetramethylpiperidin-4-yl laurate (Compound No. 13).

### (Synthesis Example 3)

The same manner as in Synthesis Example 1 was performed to obtain 11.9 g of a light yellow liquid, except that 10.0 g of stearic acid chloride was used instead of the methacrylic acid chloride and 4.0 g of allyl glycidyl ether was used instead of the n-butyl glycidyl ether.

The light yellow liquid obtained was analyzed by ¹H-NMR (CDCl₃, 400 MHz). The analysis results are shown below.

(¹H-NMR)
δ (v.s.TMS): 5.94 (m, 1H), 5.28(d, 1H), 5.18 (d, 1H), 5.11 (m, 1H), 4.04 (d, 2H) 3.65 (m, 1H), 3.43 (t, 2H), 2.64 (d, 2H), 2.27 (t, 2H), 1.88 (m, 2H), 1.45-1.66 (m, 5H), 1.22-1.44 (m, 27H), 1.02-1.22 (m, 12H), 0.88-0.95 (t, 3H)

It was confirmed from the analysis results that the light yellow liquid obtained was 1-[3-(allyloxy)-2-hydroxypropyl]-2,2,6,6-tetramethylpiperidin-4-yl stearate (Compound No. 15).

### <Preparation of composition>

### (Example 1)

First, 56.8 parts by mass of deionized water, 2.35 parts by mass of a reactive emulsifier (trade name ADEKA REASOAP SR-10 manufactured by ADEKA CORPORATION), 46.55 parts by mass of methyl methacrylate, 46.55 parts by mass of butyl acrylate, 1.9 parts by mass of acrylic acid, 0.95 parts by mass of Compound No. 1 and 1.1 parts by mass of an aqueous 10% by mass ammonium persulfate solution were uniformly mixed to prepare an emulsion for dropping. Next, a flask equipped with a dropping funnel, a stirrer, a nitrogen introduction tube, a thermometer and a reflux cooling tube was loaded with 62.95 parts by mass of deionized water, 0.15 parts by mass of a reactive emulsifier (trade name ADEKA REASOAP SR-10 manufactured by ADEKA CORPORATION), 2.45 parts by mass of methyl methacrylate, 2.45 parts by mass of butyl acrylate, 0.1 parts by mass of acrylic acid, and 0.05 parts by mass of Compound No. 1, these were heated and stirred with a nitrogen gas being mildly blown, to raise the temperature of the content in the flask to 75°C, and thereafter 1.1 parts by mass of an aqueous 10% by mass ammonium persulfate solution was added into the flask, thereby initiating emulsion polymerization. Subsequently, while the content in the flask was kept at 75°C and stirred, the emulsion for dropping was dropped into the flask at a certain dropping rate over 3 hours. After completion of the dropping, the content in the flask was stirred for 2 hours with being kept at 75°C, and thereafter cooled to room temperature, to obtain a composition.

### (Example 2)

First, 56.8 parts by mass of deionized water, 2.35 parts by mass of a reactive emulsifier (trade name ADEKA REASOAP SR-10 manufactured by ADEKA CORPORATION), 33.25 parts by mass of methyl methacrylate, 28.5 parts by mass of styrene monomer, 31.35 parts by mass of 2-ethylhexyl acrylate, 1.9 parts by mass of acrylic acid, 0.95 parts by mass of Compound No. 1 and 1.1 parts by mass of an aqueous 10% by mass ammonium persulfate solution were uniformly mixed to prepare an emulsion for dropping. Next, a flask equipped with a dropping funnel, a stirrer, a nitrogen introduction tube, a thermometer and a reflux cooling tube was loaded with 62.95 parts by mass of deionized water, 0.15 parts by mass of a reactive emulsifier (trade name ADEKA REASOAP SR-10 manufactured by ADEKA CORPORATION), 1.75 parts by mass of methyl methacrylate, 1.50 parts by mass of styrene monomer, 1.65 parts by mass of 2-ethylhexyl acrylate, 0.1 parts by mass of acrylic acid, and 0.05 parts by mass of Compound No. 1, these were heated and stirred with a nitrogen gas being mildly blown, to raise the temperature of the content in the flask to 75°C, and thereafter 1.1 parts by mass of an aqueous 10% by mass ammonium persulfate solution was added into the flask, thereby initiating emulsion polymerization. Subsequently, while the content in the flask was stirred with being kept at 75°C, the emulsion for dropping was dropped into the flask at a certain dropping rate over 3 hours. After completion of the dropping, the content in the flask was stirred for 2 hours with being kept at 75°C, and thereafter cooled to room temperature, to obtain a composition.

### (Example 3)

A composition was obtained in the same manner as in Example 2 except that Compound No. 13 was used instead of Compound No. 1.

### (Example 4)

A composition was obtained in the same manner as in Example 2 except that Compound No. 15 was used instead of Compound No. 1.

### (Comparative Example 1)

A composition was obtained in the same manner as in Example 1 except that 2,2,6,6-tetramethyl-4-piperidyl methacrylate was used instead of Compound No. 1.

### (Comparative Example 2)

A composition was obtained in the same manner as in Example 2 except that 2,2,6,6-tetramethyl-4-piperidyl methacrylate was used instead of Compound No. 1.

### <Evaluation of characteristics>

The compositions of Example 1, Example 2, Example 3, Example 4, Comparative Example 1 and Comparative Example 2 were each left to stand under an environment at 25°C for 2 hours, and then visually observed. As a result, the compositions of Example 1, Example 2, Example 3 and Example 4 each kept a state where a uniform polymer was uniformly dispersed in water, whereas the compositions of Comparative Example 1 and Comparative Example 2 were each aggregated and solidified.

The compositions of Example 1, Example 2, Example 3, Example 4, Comparative Example 1 and Comparative Example 2 each include acrylic acid as a raw material monomer, and therefore are each under an acidic condition. It was found that the compositions of Example 1, Example 2, Example 3 and Example 4 each allowed for formation of a dispersion excellent in stability under this condition. In this regard, it could not be said that the compositions of Comparative Example 1 and Comparative Example 2 each allowed for formation of a dispersion having sufficient stability.

From the foregoing, the composition of the present invention has been confirmed to allow for formation of a dispersion excellent in stability.

The followings are exemplified as additional Examples of the present invention.

### (Example 5)

A composition is obtained in the same manner as in Example 2 except that Compound No. 14 is used instead of Compound No. 1.

### (Example 6)

A composition is obtained in the same manner as in Example 2 except that a mixture of Compound No. 14 and Compound No. 15 (mass ratio 1:1) is used instead of Compound No. 1.

### (Example 7)

A composition is obtained in the same manner as in Example 1 except that Compound No. 13 is used instead of Compound No. 1.

### (Example 8)

A composition is obtained in the same manner as in Example 1 except that Compound No. 14 is used instead of Compound No. 1.

### (Example 9)

A composition is obtained in the same manner as in Example 1 except that Compound No. 15 is used instead of Compound No. 1.

### (Example 10)

A composition is obtained in the same manner as in Example 2 except that a mixture of Compound No. 14 and Compound No. 15 (mass ratio 1:1) is used instead of Compound No. 1.

### (Example 11)

A composition is obtained in the same manner as in Example 1 except that no acrylic acid is used.

### (Example 12)

A composition is obtained in the same manner as in Example 2 except that no acrylic acid is used.

### (Example 13)

A composition is obtained in the same manner as in Example 3 except that no acrylic acid is used.

### (Example 14)

A composition is obtained in the same manner as in Example 4 except that no acrylic acid is used.

### (Example 15)

A composition is obtained in the same manner as in Example 5 except that no acrylic acid is used.

### (Example 16)

A composition is obtained in the same manner as in Example 6 except that no acrylic acid is used.

### (Example 17)

A composition is obtained in the same manner as in Example 7 except that no acrylic acid is used.

### (Example 18)

A composition is obtained in the same manner as in Example 8 except that no acrylic acid is used.

### (Example 19)

A composition is obtained in the same manner as in Example 9 except that no acrylic acid is used.

### (Example 20)

A composition is obtained in the same manner as in Example 10 except that no acrylic acid is used.

### (Example 21)

First, 30.40 parts by mass of deionized water, 14.00 parts by mass of a reactive emulsifier (trade name ADEKA REASOAP SR-10 manufactured by ADEKA CORPORATION), 15.20 parts by mass of methyl methacrylate, 15.20 parts by mass of butyl acrylate, 1.35 parts by mass of acrylic acid, 30.40 parts by mass of Compound No. 1 and 6.0 parts by mass of an aqueous 10% by mass ammonium persulfate solution are uniformly mixed to prepare an emulsion for dropping. Next, a flask equipped with a dropping funnel, a stirrer, a nitrogen introduction tube, a thermometer and a reflux cooling tube is loaded with 91.10 parts by mass of deionized water, 0.90 parts by mass of a reactive emulsifier (trade name ADEKA REASOAP SR-10 manufactured by ADEKA CORPORATION), 1.52 parts by mass of methyl methacrylate, 1.52 parts by mass of butyl acrylate, and 3.40 parts by mass of Compound No. 1, these are heated and stirred with a nitrogen gas being mildly blown, to raise the temperature of the content in the flask to 75°C, and thereafter 0.70 parts by mass of an aqueous 10% by mass ammonium persulfate solution is added into the flask, thereby initiating emulsion polymerization. Subsequently, while the content in the flask is kept at 75°C and stirred, the emulsion for dropping is dropped into the flask at a certain dropping rate over 3 hours. After completion of the dropping, the content in the flask is stirred for 2 hours with being kept at 75°C, and thereafter cooled to room temperature, to obtain a composition.

### (Example 22)

A composition is obtained in the same manner as in Example 21 except that Compound No. 13 is used instead of Compound No. 1.

### (Example 23)

A composition is obtained in the same manner as in Example 21 except that Compound No. 14 is used instead of Compound No. 1.

### (Example 24)

A composition is obtained in the same manner as in Example 21 except that Compound No. 15 is used instead of Compound No. 1.

### (Example 25)

A composition is obtained in the same manner as in Example 21 except that a mixture of Compound No. 14 and Compound No. 15 (mass ratio 1:1) is used instead of Compound No. 1.

### (Example 26)

A composition is obtained in the same manner as in Example 21 except that no acrylic acid is used.

### (Example 27)

A composition is obtained in the same manner as in Example 22 except that no acrylic acid is used.

### (Example 28)

A composition is obtained in the same manner as in Example 23 except that no acrylic acid is used.

### (Example 29)

A composition is obtained in the same manner as in Example 24 except that no acrylic acid is used.

### (Example 30)

A composition is obtained in the same manner as in Example 25 except that no acrylic acid is used.

## Claims

1. A composition comprising:
a polymer obtained by polymerizing a monomer component containing a compound represented by the following general formula (1); and
an aqueous dispersion medium, 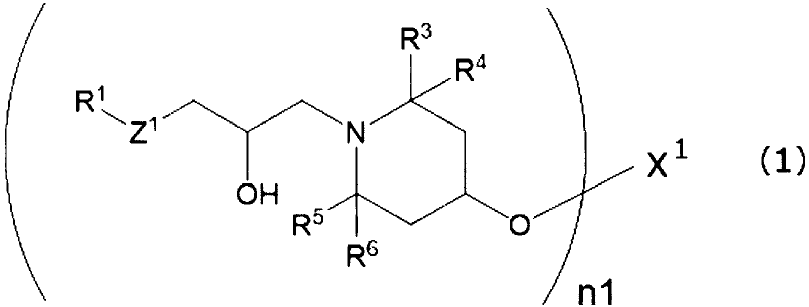 wherein
in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 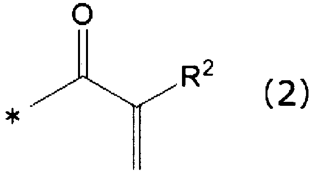
in the general formula (2), * represents a moiety bound with an oxygen atom, and R² represents a hydrogen atom or a substituted or unsubstituted monovalent hydrocarbon group having 1 to 30 carbon atoms.

2. The composition according to claim 1, wherein the compound represented by the general formula (1) is a compound represented by the following general formula (11): 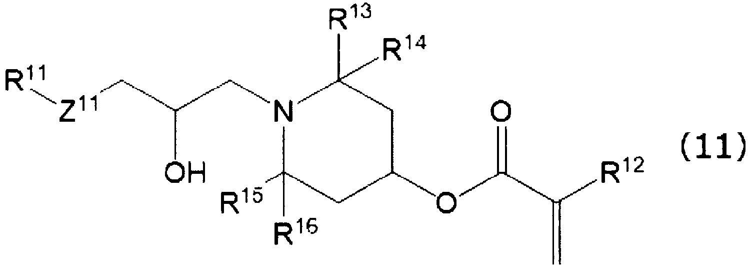 wherein in the general formula (11), Z¹¹ represents a single bond or an oxygen atom, R¹¹ represents a substituted or unsubstituted monovalent hydrocarbon group having 1 to 30 carbon atoms or a group represented by -C(=O)-R¹⁸, R¹² represents a hydrogen atom or a substituted or unsubstituted monovalent hydrocarbon group having 1 to 30 carbon atoms, and R¹³, R¹⁴, R¹⁵, R¹⁶ and R¹⁸ each independently represent a substituted or unsubstituted monovalent hydrocarbon group having 1 to 30 carbon atoms.

3. The composition according to claim 1, wherein the compound represented by the general formula (1) is a compound represented by the following general formula (21): 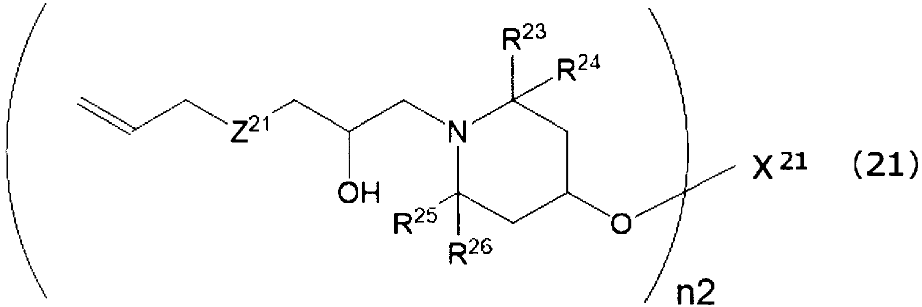 wherein
in the general formula (21), n2 represents 1 or 2, in which, when n2 is 1, X²¹ represents a substituted or unsubstituted monovalent hydrocarbon group having 1 to 30 carbon atoms, a group represented by -C(=O)-R²⁷ or a group represented by the following general formula (22), or when n2 is 2, X²¹ represents a substituted or unsubstituted divalent hydrocarbon group having 1 to 30 carbon atoms, a group represented by -C(=O)-Y²¹-C(=O)- or a -C(=O)- group and Y²¹ represents a single bond or a substituted or unsubstituted divalent hydrocarbon group having 1 to 30 carbon atoms, Z²¹ represents a single bond or an oxygen atom, and R²³, R²⁴, R²⁵, R²⁶ and R²⁷ each independently represent a substituted or unsubstituted monovalent hydrocarbon group having 1 to 30 carbon atoms, and 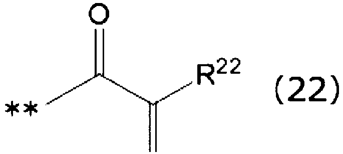
in the general formula (22), ** represents a moiety bound with an oxygen atom, and R²² represents a hydrogen atom or a substituted or unsubstituted monovalent hydrocarbon group having 1 to 30 carbon atoms.

4. The composition according to claim 1, wherein a content of the compound represented by the general formula (1) relative to the entire monomer component forming the polymer is 0.1 to 50% by mass.

5. The composition according to claim 1, wherein the monomer component forming the polymer comprises a reactive emulsifier.

6. The composition according to any one of claims 1 to 5, wherein the polymer is dispersed in the aqueous dispersion medium.

7. A coating material composition comprising a polymer obtained by polymerizing a monomer component containing a compound represented by the following general formula: 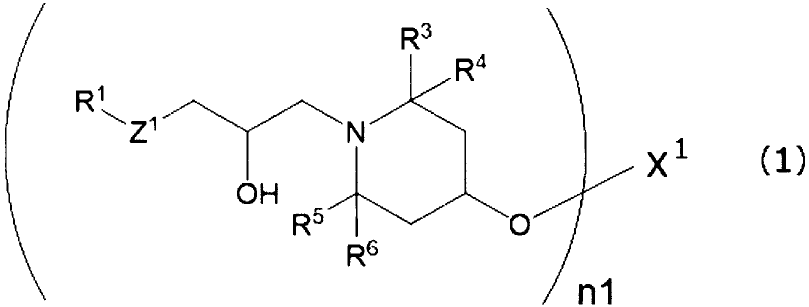 wherein
in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 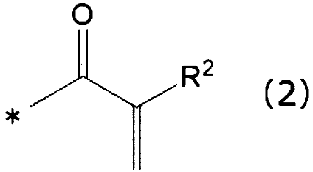
in the general formula (2), * represents a moiety bound with an oxygen atom, and R² represents a hydrogen atom or a substituted or unsubstituted monovalent hydrocarbon group having 1 to 30 carbon atoms.

8. An article comprising a coating film obtained by coating with the coating material composition according to claim 7.

9. A method for producing a composition, the method comprising a dispersing step of dispersing a polymer obtained by polymerizing a monomer component containing a compound represented by the following general formula (1), in an aqueous dispersion medium, 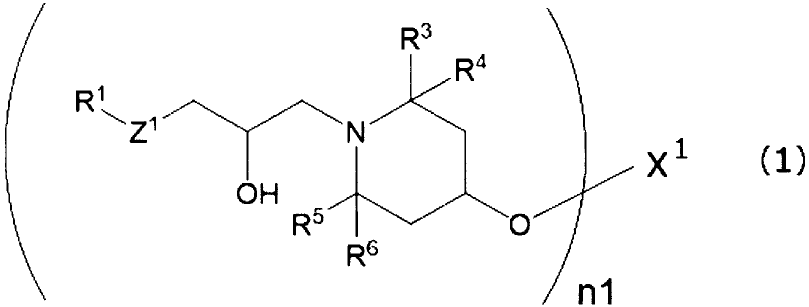 wherein
in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 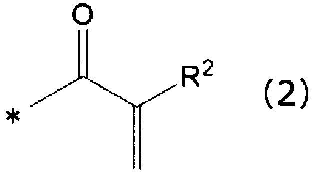
in the general formula (2), * represents a moiety bound with an oxygen atom, and R² represents a hydrogen atom or a substituted or unsubstituted monovalent hydrocarbon group having 1 to 30 carbon atoms.

10. The method for producing a composition according to claim 9, wherein the dispersing step comprises a step of emulsion-polymerizing the monomer component containing the compound represented by the general formula (1) in the aqueous dispersion medium.

11. A light stabilizer monomer component to be used for a composition comprising:
a light stabilizer polymer obtained by polymerizing a light stabilizer monomer component; and
an aqueous dispersion medium, wherein
the light stabilizer monomer component comprises a compound represented by the following general formula (1): 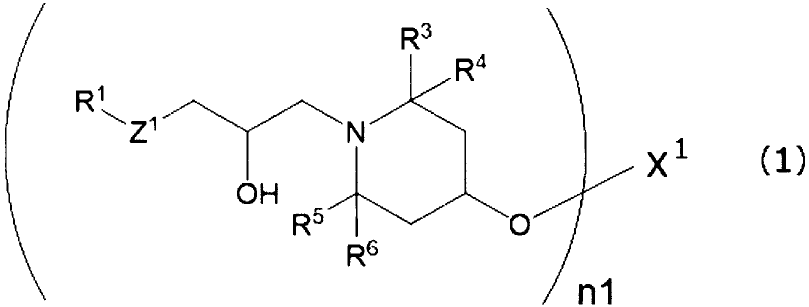 wherein
in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 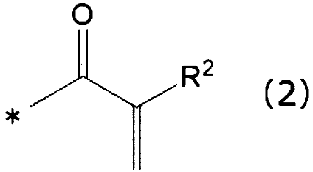
in the general formula (2), * represents a moiety bound with an oxygen atom, and R² represents a hydrogen atom or a substituted or unsubstituted monovalent hydrocarbon group having 1 to 30 carbon atoms.

12. A light stabilizer polymer to be used for a composition comprising:
a light stabilizer polymer; and
an aqueous dispersion medium, wherein
the light stabilizer polymer is obtained by polymerizing a light stabilizer monomer component comprising a compound represented by the following general formula (1): 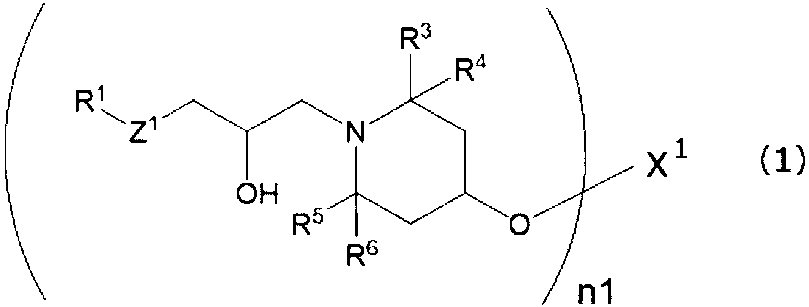 wherein
in the general formula (1), n1 represents 1 or 2, in which, when n1 is 1, X¹ represents a substituted or unsubstituted monovalent hydrocarbon group having 1 to 30 carbon atoms, a group represented by -C(=O)-R⁷, or a group represented by the following general formula (2), or when n1 is 2, X¹ represents a substituted or unsubstituted divalent hydrocarbon group having 1 to 30 carbon atoms, a group represented by -C(=O)-Y¹-C(=O)-, or a -C(=O)- group and Y¹ represents a single bond or a substituted or unsubstituted divalent hydrocarbon group having 1 to 30 carbon atoms, Z¹ represents a single bond or an oxygen atom, R¹ represents a substituted or unsubstituted monovalent hydrocarbon group having 1 to 30 carbon atoms or a group represented by -C(=O)-R⁸, R³, R⁴, R⁵, R⁶, R⁷ and R⁸ each independently represent a substituted or unsubstituted monovalent hydrocarbon group having 1 to 30 carbon atoms, and at least one of X¹ and R¹ is a group containing a vinyl group, and 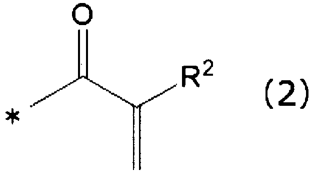
in the general formula (2), * represents a moiety bound with an oxygen atom, and R² represents a hydrogen atom or a substituted or unsubstituted monovalent hydrocarbon group having 1 to 30 carbon atoms.
